# DEMANDE DE BREVET EUROPEEN

(11) **EP 3 723 363 A1**
(43) Date de publication de la demande: **14.10.2020**
(21) Numéro de dépôt: 18849975.0
(22) Date de dépôt: 30.08.2018
(51) Int. Cl.: H04N 5/74

(54) **DISPOSITIF DE TRAITEMENT D'INFORMATIONS, SYSTÈME DE TRAITEMENT D'INFORMATIONS ET PROCÉDÉ DE TRAITEMENT D'INFORMATIONS**

(30) Priorité: 30.08.2017 JP 2017166119
(71) Demandeur: Octec Inc., Tokyo 152-0031 (JP)
(72) Inventeur: KOPFF, Pierre, Tokyo 152-0031 (JP); TOKUSHIGE, Hiroyuki, Tokyo 152-0031 (JP); LABAYRADE, Raphael, 69518 Vaulx-en-Velin (FR)
(74) Mandataire: Littolff, Denis
(86) Numéro de dépôt international: PCT/JP2018/032246
(87) Numéro de publication internationale: WO 2019/045010

(57) **Abrégé**

L'invention de rapporte à un système de traitement de l'information (20), etc. capable de réaliser un affichage en fonction d'une valeur absolue de luminance.

Le système de traitement de l'information (20) comprend : une première unité d'acquisition (61) des informations de correction en luminance qui mesure à partir d'une position spatiale prédéterminée, l'écran affichant par le dispositif d'affichage (30) une image sur la base d'un signal d'entrée, en vue d'obtenir les moyens de correction en luminance du signal d'entrée pour que l'image finalement affichée corresponde aux informations de luminance contenues dans ledit signal d'entrée ; une seconde unité d'acquisition (62) des données d'image à afficher sur ladite unité d'affichage (30), une unité de correction en luminance (63) qui corrige les données d'image acquises par la seconde unité d'acquisition (62) sur la base des informations de correction acquises par la première unité de correction en luminance (61), une unité de transmission en sortie (64) qui communique les données d'image corrigées par l'unité de correction (63) vers l'unité d'affichage (30).

## Description

### Domaine de l'invention

Cette invention concerne un dispositif de traitement de données, un système de traitement de données et une méthode de traitement de données.

### Contexte technique

La correction dite d'uniformité, qui corrige la luminance affichée à l'écran de manière à ce qu'elle soit aussi uniforme que possible sur la totalité de la surface de l'écran, - dénommée dispositif d'affichage intégrant une correction d'uniformité - est fournie dans des dispositifs employés dans les secteurs de la médecine et de l'imprimerie, par exemple. La correction d'uniformité est utilisée pour corriger les signaux rouge, vert et bleu (RVB) de chaque pixel qui composent une image d'entrée. Les signaux affichés sont obtenus par la multiplication des données d'entrée avec des facteurs prédéterminés de correction d'uniformité.

Un dispositif de traitement d'image qui décale les positions des pixels intégrant les signaux R, V et B de plusieurs unités à plusieurs dizaines d'unités lors de la multiplication des données d'entrée par les facteurs de correction d'uniformité, empêchant ainsi la génération d'une distribution de luminance semblable à une grille, est proposé (brevet de référence 1).

### Présentation de l'art antérieur

### Brevet de référence

Publication du brevet n° 2016-46751

### Résumé de l'invention

### But recherché par la présente invention

Le dispositif de traitement d'image décrit dans le brevet de référence 1 ajuste la luminance de l'écran de manière relative. Dans ces conditions, l'affichage ne peut pas être basé sur la valeur absolue de la luminance.

Un objectif principal mais non limitatif de l'invention est de fournir un dispositif de traitement de l'information ou similaire qui peut réaliser un affichage d'image en fonction d'une valeur absolue de luminance.

### Moyens pour atteindre l'objectif recherché

Le dispositif de traitement de l'information est capable de mesurer à partir d'une position de mesure prédéterminée, la luminosité de l'unité d'affichage qui affiche l'image en relation avec le signal d'entrée. La première unité d'acquisition acquiert les informations de correction de luminance qui se rapportent aux informations de luminance contenues dans le signal d'entrée. La deuxième unité d'acquisition acquiert les données d'image à afficher par l'unité d'affichage. Une unité de correction de la luminance corrige les données acquises par la deuxième unité d'acquisition sur la base des informations de correction de luminance acquises par la première unité d'acquisition. Une unité de transmission en sortie transmet les données d'image corrigées par l'unité de correction vers l'unité d'affichage.

### Avantage de l'invention

L'invention permet de fournir un dispositif de traitement de l'information ou un dispositif similaire capable de réaliser un affichage d'image en fonction d'une valeur absolue de luminance.

### Brève description des dessins

Figure 1 : elle représente une vue d'ensemble d'un système de traitement de l'information avec application de l'invention.
Figure 2A : elle représente un aperçu d'une méthode de mesure de la distribution de la luminance.
Figure 2B : elle représente une mesure de la distribution de la luminance.
Figure 3 : elle représente la configuration d'un système de traitement de l'information en phase de préparation.
Figure 4 : elle représente un graphique illustrant la relation entre les valeurs de gradation d'entrée d'un projecteur et la luminance.
Figure 5 : elle représente un tableau d'enregistrement d'une base de données de mesure de la luminance.
Figure 6 : elle représente un tableau d'enregistrement d'une base de données de correction de la luminance.
Figure 7 : elle représente un organigramme illustrant le déroulement d'un programme d'exécution de la phase de préparation.
Figure 8 : elle représente un organigramme illustrant le déroulement d'un sous-programme de calcul des valeurs de correction de luminance.
Figure 9 : elle représente un organigramme illustrant le déroulement d'un programme en phase d'utilisation opérationnelle.
Figure 10 : elle représente un organigramme illustrant le déroulement d'un programme en phase d'utilisation opérationnelle selon la configuration 2.
Figure 11 : elle représente la composition d'un système de traitement de l'information dans la phase d'acquisition en vue de la correction de forme selon la configuration 3.
Figure 12 : elle représente la disposition d'un système de traitement de l'information dans l'étape d'acquisition d'une distribution de luminance selon la configuration 3.
Figure 13 : elle représente une disposition de projecteurs et d'un écran.
Figure 14A : elle représente des projecteurs et un écran vus depuis le haut.
Figure 14B : elle représente des projecteurs et un écran vus depuis le côté droit.
Figure 15A : elle représente des projecteurs en phase de projection.
Figure 15B : elle représente des projecteurs en phase de projection.
Figure 16A : elle représente des projecteurs en phase de projection.
Figure 16B : elle représente des projecteurs en phase de projection.
Figure 17 : elle représente un exemple de résultat de mesure de la luminance selon la configuration 3.
Figure 18 : elle représente un organigramme illustrant le déroulement d'un programme dans la phase de préparation selon la configuration 3.
Figure 19 : elle représente un organigramme illustrant le déroulement d'un sous-programme d'acquisition en vue de la correction de forme.
Figure 20 : elle représente un organigramme illustrant le déroulement d'un sous-programme d'acquisition de la distribution de luminance.
Figure 21 : elle représente un organigramme illustrant le déroulement d'un programme en phase d'utilisation opérationnelle selon la configuration 3.
Figure 22A : elle représente des projecteurs, des projecteurs auxiliaires et un écran vus depuis le haut.
Figure 22B : elle représente des projecteurs, des projecteurs auxiliaires et un écran vus depuis la face arrière des projecteurs.
Figure 23 : elle représente des projecteurs en phase de projection selon la configuration 4.
Figure 24 : elle représente la disposition de projecteurs et d'un écran selon la configuration 5.
Figure 25 : elle représente la disposition d'un système de traitement de l'information en phase d'utilisation opérationnelle selon la configuration 6.
Figure 26 : elle représente un schéma fonctionnel illustrant le fonctionnement d'un dispositif de traitement de l'information selon la configuration 7.
Figure 27 : elle représente la composition d'un système de traitement de l'information selon la configuration 8.
Figure 28A : elle représente la conversion entre les coordonnées d'une image projetée par un projecteur et les coordonnées de l'aire de projection en phase opérationnelle.
Figure 28B : elle représente la conversion entre les coordonnées d'une image projetée par un projecteur et les coordonnées de l'aire de projection en phase opérationnelle.
Figure 29A : elle représente une conversion entre les coordonnées de l'aire de projection en phase opérationnelle et les données de l'image originale.
Figure 29B : elle représente une conversion entre les coordonnées de l'aire de projection en phase opérationnelle et les données de l'image originale.
Figure 30 : elle représente un tableau d'enregistrement d'une première base de données de conversion.
Figure 31 : elle représente un tableau d'enregistrement d'une deuxième base de données de conversion.
Figure 32 : elle représente un organigramme illustrant le déroulement d'un programme selon la configuration 9.
Figure 33A : elle représente un état de projection sur un écran de quatre projecteurs, du premier au quatrième.
Figure 33B : elle représente une aire de projection en phase opérationnelle superposée à l'état de projection représenté en Figure 33A.
Figure 34A : elle représente une deuxième variante de correction de forme selon la configuration 9.
Figure 34B : elle représente une deuxième variante de correction de forme selon la configuration 9.

### Description détaillée de l'invention

### Configuration 1

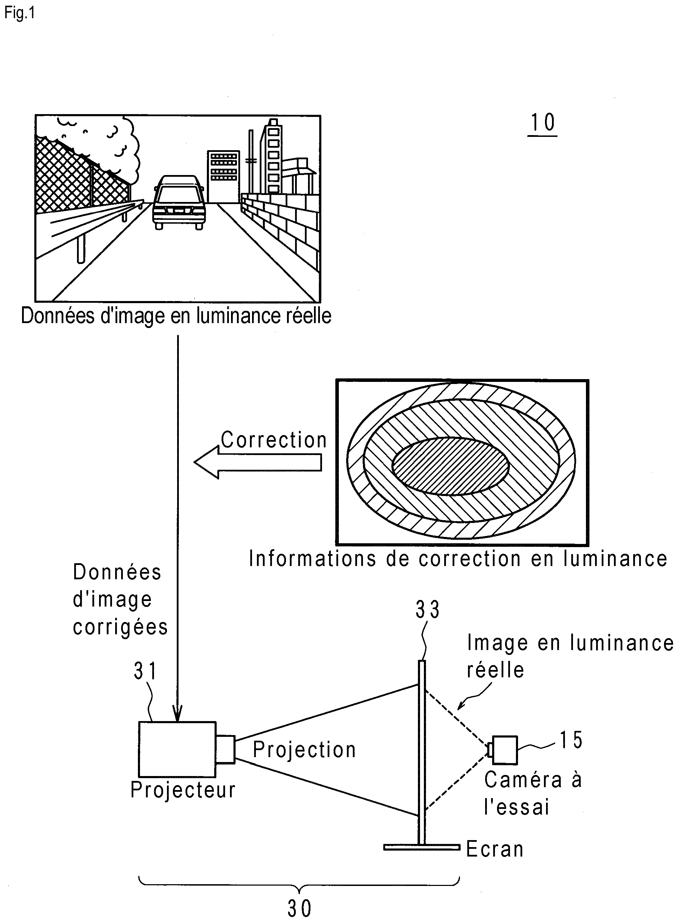

La FIG. 1 est une illustration qui donne un aperçu du système de traitement de l'information 10. Le système de traitement de l'information 10 est ici représenté dans le cas d'une utilisation afin d'essai d'évaluation d'une caméra 15, telle que, par exemple, une caméra embarquée dans un véhicule automobile.

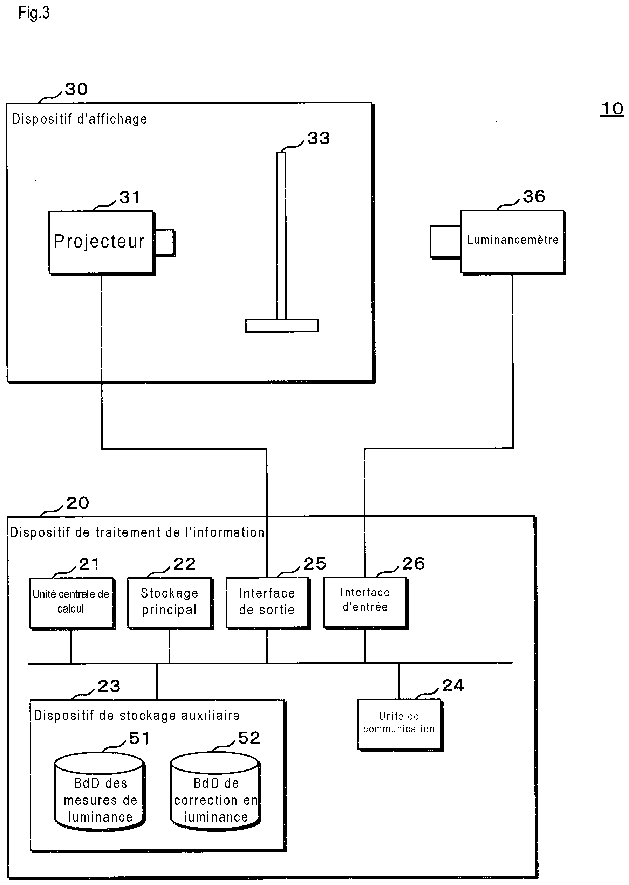

Le système de traitement de l'information 10 se compose d'un dispositif de traitement de l'information 20 (voir FIG. 3) connectée à un dispositif d'affichage 30. Le dispositif d'affichage 30 comprend des projecteur 31 et un écran 33 pour la rétroprojection. La caméra à tester 15 est positionnée face aux projecteurx 31 et au-delà de l'écran 33.

Les données des images en luminance réelle, comprenant les informations de luminance correspondant à la luminance réelle, sont entrées dans le dispositif de traitement de l'information 20. Ici, la « luminance réelle » est liée à une courbe de sensibilité spectrale inhérente, telle qu'une luminance cible et une composante trichromatique, fondée sur la radiance spectrale. Il s'agit d'une quantité physique ou d'un rayonnement spectral dont la valeur est déterminée de manière unique. Afficher en « luminance réelle » signifie reproduire la quantité physique absolue décrite ci-dessus et l'afficher en tant que telle.

Les données d'une l'image et de luminance réelle sont, par exemple, celles d'une image réelle prise par un luminance-mètre couleur bidimensionnel à haute résolution 36. Pour obtenir les données d'images en luminance réelle, un calibrage en luminance doit être préalablement effectué pour permettre la prise de vue en luminance réelle. Il peut également s'agir d'une image réelle prise par un appareil photographique numérique. Les données de l'image en luminance réelle peuvent encore être une image de synthèse créée par un outil de simulation fondée sur la théorie physique. Enfin, les données de luminance réelle peuvent être une image spectrale prise par une caméra hyperspectrale ou tout autre dispositf de ce type.

Les données de luminance réelle de l'image peuvent, par exemple, être utilisées pour convertir chaque pixel de l'image à afficher en utilisant les composantes trichromatiques X, Y et Z du système de couleurs de la CIE (CIE : Commission internationale de l'éclairage). Chaque pixel de l'image à afficher peut alternativement prendre une valeur de l'espace de couleur CIELAB (CIE L*a*b*) ou encore une valeur de l'espace de couleur CIERGB (CIE Rouge Vert, Bleu) ou enfin une valeur de l'espace de couleur CIELMS (CIE Long Médium Short) spécifique, etc. Il intègre une courbe de sensibilité spectrale et est représenté par une grandeur physique dont la valeur est déterminée spécifiquement à partir de la radiance spectrale. La quantité physique n'est pas limitée à trois dimensions ; elle peut être une quantité physique en une, deux ou plus de quatre dimensions. Les données d'image de luminance réelle peuvent être les données d'image qui comportent la radiance spectrale de chaque pixel.

Les données d'image en luminance réelle peuvent également être un ensemble de données d'image ou de données vidéo dans un format commun tel que JPEG (Joint Photographic Experts Group) ou PNG (Portable Network Graphics) associées à des informations de référence ou similaires qui mettent en correspondance les valeurs de gradation RVB avec un niveau de luminance adapté à ces données.

Les données d'image en luminance réelle peuvent également être des données d'image ou des données vidéo dans un format commun, tel que JPEG ou PNG, associées à des données qui mettent en correspondance les valeurs de gradation RGB enregistrées avec des niveaux de luminance en relation avec la valeur de gamma et les informations de sensibilité aux couleurs de l'équipement de prise de vue.

Les données d'image en luminance réelle sont corrigées en luminance en fonction des informations de correction de la luminance décrites ci-dessous. Les données d'image après correction en luminance sont transmises en entrée vers les projecteurs 31. Les projecteurs 31 projettent l'image sur l'écran 33 sur la base des données d'image en entrée. Dans le cas de la présente configuration, les projecteurs 31 inversent les côtés gauche et droit de l'image d'entrée, un tel mode de projection étant dit rétro-projection.

L'image est projetée sur l'écran 33 selon un mode de rétroprojection. Voici un exemple de cas dans lequel l'image est observée depuis une position à peu près opposée au projecteur 31. En général, l'image de rétroprojection est basée sur les caractéristiques de distribution de la lumière du projecteur 31 et l'orientation de l'écran 33, la luminance en partie centrale étant élevée, la luminance en périphérie étant perçue plus faible. Par exemple, lorsque la position d'observation est déplacée vers la droite, la zone de forte luminance semble se déplacer vers la droite.

Les informations de correction en luminance corrigent la distribution de la luminance et la valeur absolue de luminance, celles-ci variant en fonction de la position d'observation. Dans les explications qui suivent, l'étape de traitement est appelée « phase préparatoire » jusqu'à ce que les informations de correction en luminance soient créées. Dans les explications qui suivent, la position à partir de laquelle la luminance est mesurée afin de créer les informations de correction en luminance est appelée position de mesure.

Une fois la phase de préparation achevée, le système de traitement de l'information 10 de la présente configuration entre en phase d'utilisation opérationnelle. En phase d'utilisation opérationnelle, les données de l'image en luminance réelle, corrigées à l'aide des informations de correction de la luminance correspondant à une position de mesure, sont transmises en entrée vers les projecteurs 31 et projetées sur l'écran 33. À partir de la position de mesure, il est possible de visualiser une image en luminance réelle qui soit fidèle aux données de l'image en luminance réelle. En plaçant la caméra à tester 15 à la position de mesure, la caméra à tester 15 permet la prise de vues en luminance réelle.

La réalisation d'essais d'une caméra 15 à l'aide d'un système tel que décrit ci-dessus permet, par exemple, l'évaluation sur la création des images par la dite caméra des effets d'éblouissement dans les lentilles et des images fantômes liés à aux phares d'un véhicule venant en sens inverse. ou liés à la variation de luminosité avant et après un tunnel. Comme il est facile d'évaluer plusieurs modèles de caméra 15 dans des conditions identiques, des informations utiles peuvent être ainsi obtenues, par exemple, pour la sélection de modèles de caméras embarquées.

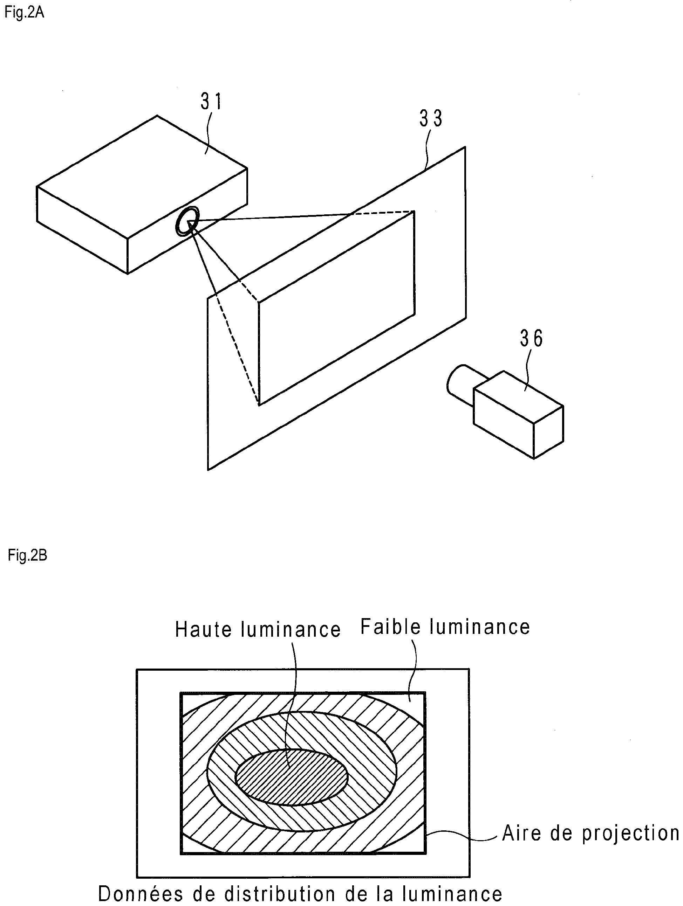

La figure 2 représente une vue d'ensemble de la mesure de la distribution de la luminance. Comme le montre la FIG. 2A, une image uniforme est projetée sur l'écran 33 par des projecteurs 31, de couleurt grise, blanche ou noire. Dans les explications qui suivent, l'expression de «gris» vaut pour toutes les nuances, du blanc jusqu'au noir. La luminance de l'image projetée est mesurée pour chaque points à l'aide d'un luminance-mètre 36 placé à la position de mesure.

Une fois une mesure de luminance terminée, le niveau de gris projeté de l'image projetée par les projecteurs 31 sur l'écran 33 est modifié, puis la luminance est mesurée à nouveau. Sur la base de ce qui précède, la luminance en chacun des points de l'image est mesurée en correspondance à plusieurs niveaux de gris différents projetés par les projecteurs 31.

Dans la présente configuration, un luminancemètre couleur bidimensionnel à haute résolution est utilisé en tant que luminancemètre 36. Un luminancemètre bidimensionnel peut également être utilisé en tant que luminancemètre 36. La luminance en chaque point de l'image peut être mesurée par un luminancemètre capable seulement de mesurer la luminance d'un seul point en recourant à un balayage mécanique de l"écran 33.

La figure 2B montre un exemple de résultats de mesure de la luminance. La luminance au centre de l'aire de projection est forte et diminue vers les bords. L'état de distribution de la luminance est affecté par la position de mesure, les différences individuelles entre les projecteurs 31, la position de l'écran 33 par rapport aux projecteurs 31. L'état de la distribution de la luminance change également avec la dégradation des lampes, sources lumineuses des projecteurs 31, au fil du temps.

La figure 3 est une illustration de la composition du système de traitement de l'information 10 en phase de préparation. Le système de traitement de l'information 10 en cours de préparation se compose d'un dispositif de traitement de l'information 20, d'un dispositif d'affichage 30 et d'un luminancemètre 36.

Le dispositif de traitement de l'information 20 se compose d'une unité centrale de traitement (UCT) 21, d'une mémoire principale 22, d'une mémoire auxiliaire 23, d'une unité de communication 24, d'une interface de sortie 25, d'une interface d'entrée 26 et d'un bus informatique. Le dispositif de traitement de l'information 20 de la présente configuration est un dispositif de traitement de l'information tel qu'un ordinateur personnel usuel ou une tablette.

L'unité centrale de traitement UCT 21, dans le cas de la présente configuration, est une unité de gestion des opérations de calcul pour exécuter le programme. L'unité centrale de traitement UCT 21 peut utiliser une ou plusieurs unités de traitement, ou bien une unité multi-cœurs. Au lieu de plusieurs UCT ou d'UCT multi-cœurs, ou en plus d'une ou plusieurs UCT ou d' UCT multi-coeurs, des FPGA (portes logiques programmable par l'utilisateur), un CPLD (dispositif logique complexe programmable), des ASIC (circuits intégrés à application spécifique) ou GPU(unité de traitement graphique) peuvent également être utilisés. L'unité centrale de traitement UCT 21 peut, par l'intermédiaire d'un bus informatique, être reliée aux parties matérielles composant le dispositif de traitement de l'information 20.

La mémoire principale 22 est un dispositif de stockage tel qu'une SRAM (mémoire statique à accès aléatoire), une mémoire dynamique à accès aléatoire (DRAM) ou une mémoire flash. La mémoire principale 22 contient les informations nécessaires au cours des traitements effectués par le dispositif de traitement des informations 20 et sauvegarde temporairement le programme exécuté par le dit dispositif de traitement des informations 20.

Le dispositif de stockage auxiliaire 23 peut être une mémoire telle qu'une SRAM, une mémoire flash, un disque dur ou une bande magnétique. Le dispositif de stockage auxiliaire 23 peut contenir le programme à exécuter par l'unité centrale de traitement 21, une base de données de mesure des luminances 51 ou la base des variables de correction de luminance 52, de même que diverses informations nécessaires à l'exécution du programme.

La base des données de mesure de luminance 51 et la base des variables correction de luminance 52 peuvent être stockées dans un dispositif de stockage différent lui même relié au dispositif de traitement de l'information 20 par un réseau. Les données peuvent être qui a été fabriqué. Les détails de chaque base de données ou variables sera décrits ci-dessous. L'unité de communication 24 est une interface de communication avec un réseau.

L'interface de sortie 25 est une interface permettant la transmission en sortie des données d'image à afficher par le dispositif d'affichage 30. L'interface d'entrée 26 est une interface permettant l'acquisition des résultats des mesures de luminance par le luminancemètre 36. L'interface d'entrée 26 peut également être une interface de lecture de données mesurées à l'avance à l'aide du luminancemètre 36 en utilisant un support de stockage portable tel qu'une carte de mémoire SD (numérique sécurisée).

Le dispositif d'affichage 30 est doté d'un écran 33 et de projecteurs 31. L'écran 33 est destiné à la rétroprojection. L'écran 33 n'est qu'un exemple d'unité d'affichage envisageable dans le cadre de la présente configuration.

Le dispositif d'affichage 30 peut comprendre un projecteur frontal 31 avec un écran 33 adapté à la projection frontale. Le dispositif d'affichage 30 peut également être un panneau d'affichage à cristaux liquides ou à électroluminescence (OLED), ou tout autre type de panneau d'affichage.

En phase d'utilisation opérationnelle, au lieu du luminancemètre 36, une caméra 15 soumise à essai peut être placée comme indiqué dans la figure 1, ceci n'étant qu'un exemple. La caméra 15 à tester n'a pas besoin d'être connectée à l'interface d'entrée 26.

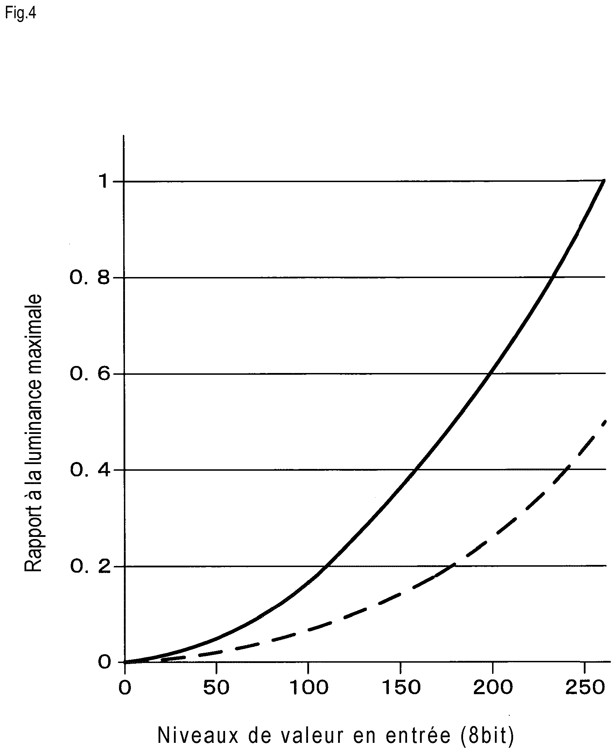

La figure 4 est un graphique montrant la relation entre la valeur d'entrée en niveau de l'un des projecteurs 31 et la luminance. L'axe horizontal de la FIG. 4 correspond à la valeur tonale d'une image dont toute la surface est grise et transmise en entrée des projecteurs 31 via l'interface de sortie 25. Dans la présente confirguration, le signal en entrée des projecteurs 31 est codé en 8 bits, avec une valeur de 0 à 255, soit 256 nuances de gris qui peuvent ainsi transmises. Lorsque la valeur d'entrée est 0, cela signifie une couleur noire, et lorsque la valeur d'entrée est 255, cela signifie une couleur blanche. Le signal d'entrée des projecteurs 31 peut être codée en un nombre de bits supérieur à 8 bits.

L'axe vertical de la figure 4 est le rapport entre la luminance ponctuelle mesurée par le luminancemètre 36 et la luminance maximale, c'est-à-dire la valeur maximale de luminance dans la zone d'affichage. Il exprime une normalisation des mesures de luminance réelles par la luminance maximale. La ligne pleine montre les résultats de mesure pour le centre de l'écran 33 et la ligne pointillée montre un exemple de résultats de mesure pour le bord de l'écran 33. Plus la valeur de niveau d'entrée est importante, plus la mesure de luminance réelle est importante. Pour toute valeur de gris en entrée, la valeur de luminance mesurée sur les bords est inférieure à celle mesurée au centre.

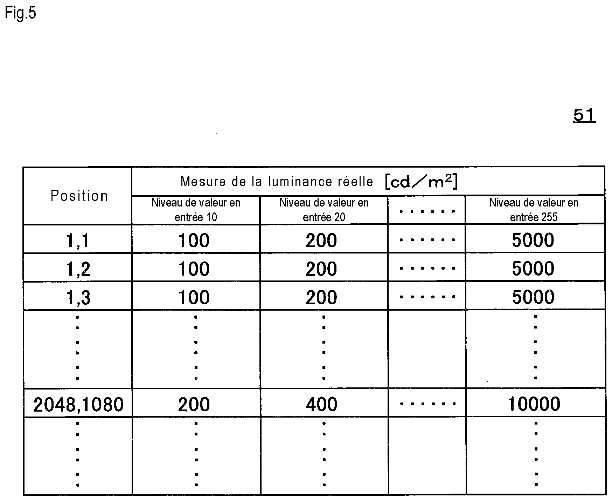

La figure 5 illustre le tableau d'enregistrement de la mesure réelle de luminance sous forme d'une base de données 51. La base de données des mesures de luminance 51 met en relation une position ponctuelle sur l'écran 33 avec la valeur réelle de luminance mesurée par le luminancemètre 36. La base de données des mesures de luminance 51 possède une série de champs de positions et de champs des valeurs de mesure de luminance. Elle comporte un nombre quelconque de champs correspondant à un niveau d'entrée, comme par exemple le champ de niveau 10, le champ de niveau 20 et le champ de niveau 255.

Dans le champ de position, la position sur l'écran 33 est enregistrée par les coordonnées X et les coordonnées Y. Dans la présente configuration, les coordonnées X et Y résultent des positions des pixels de mesure par le luminancemètre couleur bidimensionnel 36. Le champ de niveau 10 rassemble les données de mesure de luminance réelle de chaque position sur l'écran correspondant au niveau d'entrée de 10 transmis par l'interface de sortie 25 aux projecteurs 31. Dans ce cas, toute la surface de l'écran est affichée par les projecteurs 31 à ce niveau d'entrée de 10 comme un écran gris foncé. L'unité de mesure de la luminance est la candela par mètre carré.

De même, dans le champ de niveau d'entrée 20 figurent les valeurs mesurées de luminance sur chacun des points de l'écran correspondant au niveau d'entrée 20 transmis par l'interface de sortie 25 aux projecteurs 31. Le champ de niveau 255 enregistre les valeurs de luminances réelles sur chacun des points de l'écran correspondant au niveau 255 en entrée des projecteurs par l'interface de sortie 25.

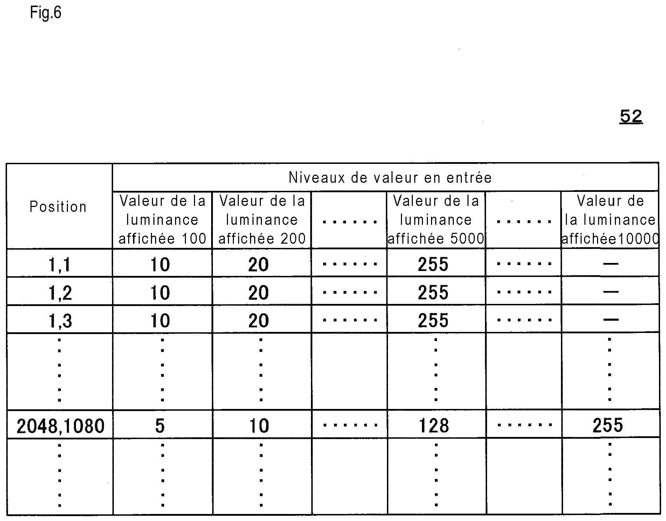

La figure 6 illustre une disposition d'enregistrement de la base de variables de correction de luminance 52. La base des variables de correction de la luminance 52 est une base qui enregistre la relation entre la position sur l'écran et la valeur de l'échelle de gris qui est entrée à partir de l'interface de sortie 25 vers les projecteurs 31 en vue de pouvoir obtenir une valeur de luminance d'affichage prédéterminée. Les informations enregistrées dans la base des variables de correction en luminance 52 sont un exemple d'informations de correction de luminance dans le cas de la présente configuration.

La base des variables de correction de luminance 52 possède un champ de positions et des champs de valeurs de niveau d'entrée. Les champs de valeur de niveau d'entrée peuvent être en nombre quelconque selon le niveau d'affichage en luminance affichée, par exemple le champ de luminance 100, luminance 200, luminance 5000 ou luminance 10000.

Dans le champ des position, toute position sur l'écran 33 est enregistrée par sa coordonnée X et sa coordonnée Y. Dans le champ de luminance affichée de niveau 100, on enregistre la valeur du niveau d'entrée dans le projecteur à partir de l'interface de sortie 25 lorsque la valeur de luminance affichée est de 100 candela/mètre carré, telle que mesurée par un luminancemètre placé à l'endroit de la mesure.

De même, dans le champ de la valeur de luminance affichée 200, les valeurs enregistrées correspondent au niveau d'entrée par l'interface de sortie 25 vers le projecteur lorsque la valeur de luminance affichée est de 200 candela/mètre carré, mesurée par un luminancemètre 36 placé à l'endroit de mesure. Dans le champ de luminance affichée 5000, les valeurs de niveau d'entrées vers les projecteurs 31 par l'interface de sortie sont enregistrées pour la valeur de luminance affichée de 5000 candelas/mètre carré, mesurée par un luminancemètre 36 disposé à l'endroit de mesure.

Les figures 5 et 6 sont utilisées pour illustrer un exemple spécifique. Comme le montre la FIG. 5, lorsque la valeur de niveau d'entrée est de 10 à la position (1, 1), la valeur réelle de luminance mesurée est de 100 candela/mètre carré. Par conséquent, comme le montre la figure 6, à la position (1, 1), pour obtenir une valeur de luminance sur l'écran de 100 candela/mètre carré, la valeur en niveau d'entrée nécessaire est de 10.

Dans la figure 6, un signe "-" indique que la luminance adressée n'est pas obtenue. Par exemple, à la position (1, 1), même si la valeur du niveau d'entrée est augmentée, la valeur de 10000 de luminance sur l'écran en candela/mètre carré n'est pas disponible.

Si une luminance correspondant au champ de valeur de luminance affichée de la FIG. 6 n'est pas enregistrée en tant que mesure réelle de luminance par la base de données 51 indiquée en FIG. 5, la valeur du niveau d'entrée est obtenue par un processus d'interpolation selon n'importe quelle méthode, telle par exemple une interpolation linéaire, et est enregistrée dans le champ des valeur de luminance d'affichage.

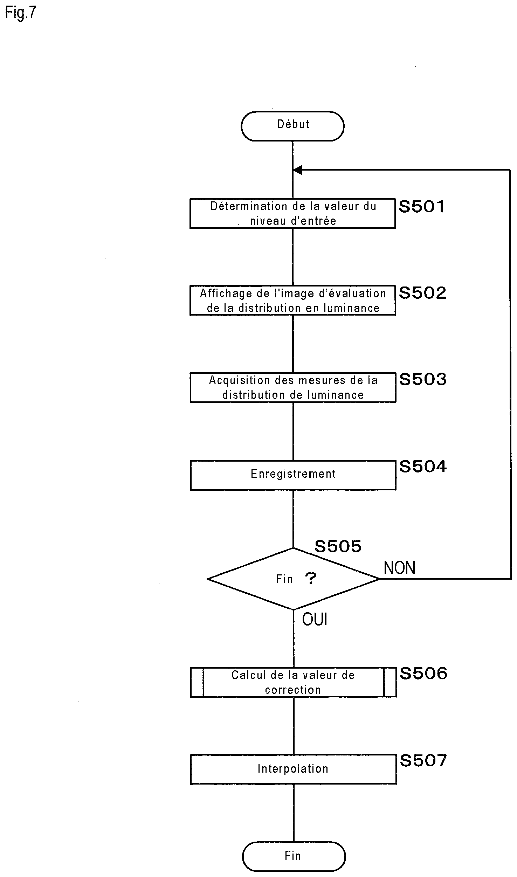

La figure 7 est un organigramme illustrant le déroulement du programme dans la phase de préparation. Le programme illustré à la figure 7 est exécuté une fois l'écran 33 et les projecteurs 31 mis en place, la mise au point optique étant faite, et le luminancemètre 36 placé en position de mesure.

L'unité centrale de traitement UCT 21 détermine la valeur des niveaux d'entrée (étape S501). La valeur des niveaux d'entrée peut être définie comme n'importe quelle valeur, par exemple, avec un pas de dix niveaux. L'image d'évaluation de la distribution de la luminosité est affichée par le dispositif d'affichage 30 (étape S502). Plus précisément, l'unité centrale 21 transmet aux projecteurs 31, via l'interface de sortie 25, les données d'une image d'évaluation de la distribution de la luminosité dont toute la surface correspond aux niveaux déterminés à l'étape S501. Le projecteur projette l'image sur l'écran en fonction des données d'image acquises. L'image d'évaluation de la distribution de la luminosité s'affiche alors à l'écran. L'image d'évaluation de la répartition de la luminosité peut être, par exemple, une image dans laquelle les différents niveaux sont disposés en damier.

L'unité centrale 21 obtient des mesures de la distribution de la luminance via le luminancemètre 36 et l'interface d'entrée 26 (étape S503). L'unité centrale 21 enregistre (étape S504) les valeurs mesurées dans le champ correspondant à la valeur des niveaux d'entrée déterminée à l'étape S501 en tant qu'enregistrement correspondant à chaque position de coordonnées de la base de données 51 des mesures de la luminance.

L'unité centrale 21 détermine si la mesure de la valeur de niveau d'entrée prédéterminée a été effectuée ou non (étape S505). S'il est déterminé qu'elle n'est pas terminée (NON à l'étape S505), l'unité centrale 21 revient à l'étape S501. Si elle est jugée terminée (OUI à l'étape S505), l'unité centrale 21 passe au calcul de la valeur de correction avec lancement du sous-programme correspondant (étape S506). Le sous-programme de calcul de la valeur de correction crée une base de variables de correction de luminance 52 basée sur les mesures de luminance réelle 51. Le flux de traitement du sous-programme pour le calcul de la valeur de correction est décrit ci-dessous.

L'unité centrale 21 interpole la base des variables de correction de luminance 52 pour qu'elle corresponde à la résolution des données d'entrée à introduire dans les projecteurs 31 (étape S507). Plus précisément, l'unité centrale 21 ajoute des enregistrements à la base des variables de correction 52 de la luminance de sorte que le nombre de pixels d'affichage par les projecteurs corresponde au nombre d'enregistrements de la base de correction 52 de la luminance. L'unité centrale 21 enregistre les valeurs de niveau d'entrée pour chaque champ des enregistrements ajoutés en se basant sur une technique d'interpolation arbitraire. En outre, l'unité centrale 21 corrige les données dans le champ de position pour qu'elles correspondent aux positions des pixels du projecteur. L'unité centrale 21 met alors fin au processus.

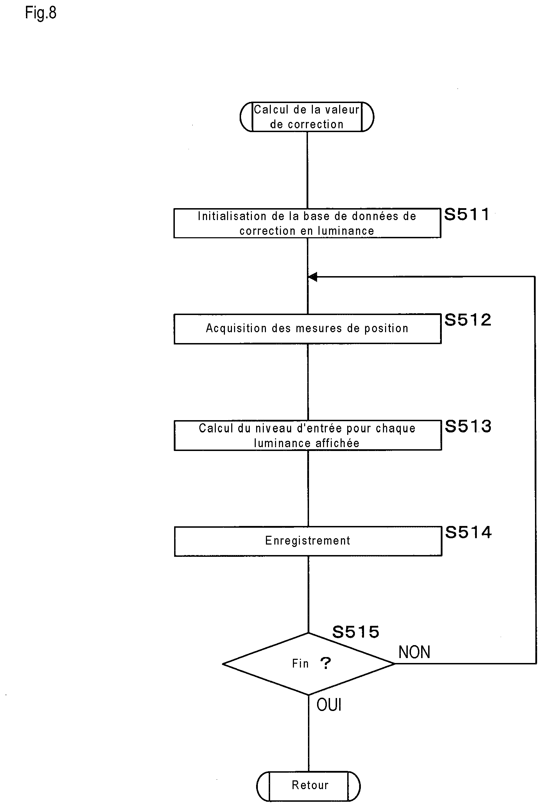

La figure 8 est un organigramme illustrant le flux de traitement du sous-programme pour le calcul de la valeur de correction. L'unité centrale 21 initialise la base 52 des variables de correction de luminance (étape S511). Plus précisément, l'unité centrale 21 supprime les enregistrements existants de la base 52 de correction de la luminance et crée le même nombre d'enregistrements que la base 51 des mesures de la luminance réelle. L'unité centrale 21 enregistre les mêmes données dans le champ de position de chaque enregistrement que celles dans le champ de position de la base 51 des mesures de la luminance réelle.

L'unité centrale 21 obtient un résultat de mesure de la base 51 des mesures de la luminance montrant la relation entre la valeur de niveau d'entrée et la valeur de luminance correspondant à un enregistrement de la base 51, c'est-à-dire à une position sur l'écran (étape S512).

L'unité centrale 21 calcule les valeurs de niveau d'entrée correspondant aux valeurs de luminance de chaque champ de valeur de luminance d'affichage dans la base 52 de correction de la luminance (étape S513). L'unité centrale calcule les valeurs de niveau d'entrée pour une valeur de luminance d'affichage donnée, par exemple, par interpolation linéaire des données acquises à l'étape S512. L'unité centrale 21 calcule les valeurs de niveau d'entrée pour une valeur de luminance d'affichage donnée sur la base des données acquises à l'étape S512. Par exemple, une fonction indiquant la relation entre la valeur de niveau d'entrée et la valeur de luminance de l'affichage peut être calculée par la méthode des moindres carrés ou une méthode similaire, et la valeur de niveau d'entrée pour une valeur de luminance d'affichage donnée peut être calculée sur la base de la fonction calculée.

L'unité centrale 21 enregistre les valeurs de niveau d'entrée pour chaque valeur de luminance d'affichage calculée à l'étape S513 dans l'enregistrement de la base 52 des variables de correction de luminance correspondant à la position obtenue à l'étape S512 (étape S514).

L'unité centrale 21 détermine si elle a terminé ou non le traitement de tous les enregistrements de la base des mesures réelles de luminance 51 ((Étape S515). S'il est déterminé que le traitement n'est pas terminé (NON à l'étape S515), l'unité centrale 21 revient à l'étape S512 . S'il est déterminé que le traitement est terminé (OUI à l'étape S515), l'unité centrale 21 met fin au processus.

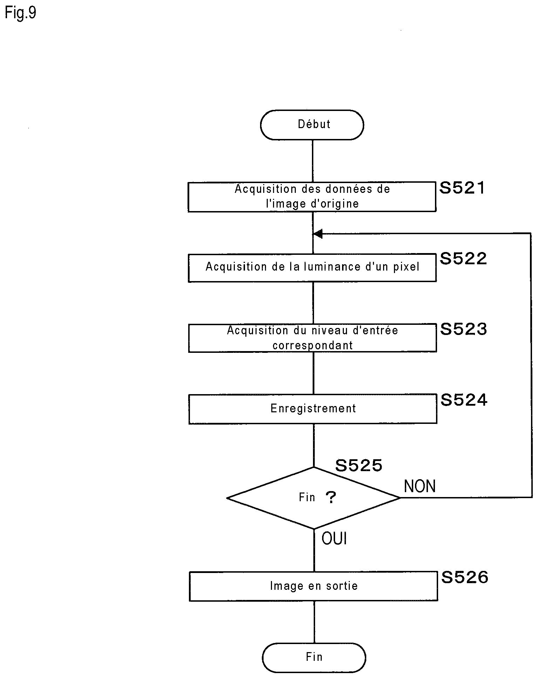

La figure 9 est un organigramme illustrant le flux de traitement du programme lors de la phase d'utilisation opérationnelle. L'unité centrale 21 obtient les données d'image d'origine à partir d'un dispositif de stockage auxiliaire 23 ou d'un autre serveur ou similaire connecté via un réseau (étape S521). L'unité centrale 21 peut obtenir les données d'image d'origine via une interface telle que HDMI ou similaire. Les données d'image d'origine peuvent être générées par un logiciel de simulation. L'unité centrale 21 peut stocker les données d'image d'origine acquises à l'extérieur dans un dispositif de stockage auxiliaire 23, puis les acquérir à nouveau. Les données d'image d'origine sont les données d'image en luminance réelle, y compris les informations sur la luminance réelle. Par l'étape S521, l'unité centrale 21 réalise la fonction de la deuxième unité d'acquisition dans le cas de la présente configuration.

L'unité centrale de traitement 21 acquiert la valeur de luminance d'un pixel dans l'image acquise à l'étape S521 (étape (S522). L'unité centrale de traitement 21 extrait de la base des données de correction de luminance 52 l'enregistrement correspondant à la position du pixel acquis à l'étape S522. L'unité centrale de traitement 21 acquiert ensuite la valeur du niveau d'entrée du champ correspondant à la valeur de luminance acquise à l'étape S522 (étape S523). Par l'étape S523, l'unité centrale 21 réalise la fonction dévolue à la première unité d'acquisition de la présente configuration.

Si la correction de luminance DB 52 n'a pas de champ correspondant à la valeur de luminance obtenue à l'étape S522, l'unité centrale 21 calcule la valeur du gradient d'entrée par interpolation.
Si la correction de luminance dans la base de données 52 ne dispose pas d'un champ correspondant à la valeur de luminance obtenue à l'étape S522, l'unité centrale 21 calcule la valeur du niveau d'entrée par interpolation.

L'unité centrale 21 enregistre les valeurs de niveau d'entrée obtenues à l'étape S523 par rapport aux positions des pixels obtenues à l'étape S522 (étape S524). Dans l'étape S524, l'unité centrale 21 réalise la fonction attribuée à l'unité de correction en luminance de la présente configuration. L'unité centrale 21 détermine si le traitement de tous les pixels des données de l'image originale a été achevé ou non (étape S525). S'il est déterminé que le traitement n'est pas terminé (NON à l'étape S525), l'unité centrale 21 revient à l'étape S522.

Lorsque le traitement est considéré terminé (OUI à l'étape S525), l'unité centrale 21 transmet les données d'image au projecteur 31 via l'interface de sortie 25 sur la base des valeurs de niveau d'entrée de chaque pixel enregistrées à l'étape S524 (étape S526). Avec l'étape S526, l'unité centrale 21 réalise la fonction attribuée à l'unité de sortie dans la configuration présente. Le projecteur 31 projette l'image sur l'écran 33 sur la base des données d"image en entrée. Par la suite, l'unité centrale met fin au processus de traitement.

Selon le procédé décrit ci-dessus, l'écran 33 affiche une image en luminance réelle lorsqu'elle est vue depuis la position de mesure.

En application de la configuration présente, un dispositif de traitement de l'information 20 ou similaire peut être réalisé, capable d'un affichage en fonction d'une valeur absolue de luminance.

En tant qu'exemple d'application, en plaçant une caméra à tester 15 à la position de mesure et en visant l'image sur l'écran 33, une évaluation de la caméra à tester 15 peut être effectuée en utilisant des images en luminance réelle.

En utilisant le système de traitement de l'information 10 de la présente version, il est possible d'évaluer les effets de l'éblouissement et de l'image fantôme des lentilles, causés par exemple par les phares des véhicules venant en sens inverse ou d'autres facteurs, ou les changements de luminosité avant et après le tunnel, sur les images prises par la caméra 15 testée.
En utilisant le système de traitement de l'information 10 tel que décrit dans sa présente configuration, il est possible d'évaluer, sur les images prises par la caméra à tester 15, les effets de l'éblouissement de l'objectif et des images fantômes causés, par exemple, par les phares de véhicules automobiles venant en sens inverse, ou les changements de luminosité en entrée et en sortie de tunnel.

L'image affichée en luminance réelle peut être dynamique, par exemple une vidéo. En faisant passer l'image à projeter du projecteur 31 à l'écran 33 à une fréquence d'images prédéterminée, une vidéo peut être affichée sur l'écran 33 en luminance réelle. Cela peut permettre, par exemple, de vérifier le fonctionnement de la conduite autonome sur la base d'images captées par une caméra embarquée. Il est également possible de réaliser des simulations de conduite et autres applications en utilisant les images affichées en luminance réelles.

### Configuration 2

La présente configuration concerne un dispositif de traitement de l'information 20 qui crée des informations de correction de luminance pour une pluralité de positions de mesure et affiche des images corrigées en fonction de la position de mesure la plus proche de la position où la caméra 15 à tester ou son équivalent aura été installé. La description des parties communes avec la configuration 1 seront omises.

Dans cette configuration, le processus correspondant à l'étape de préparation tel que décrit à l'aide de la figure 7 est réalisé pour une pluralité de positions de mesure. La base des données de correction en luminance 52 correspondant à chaque position de mesure est stockée dans l'unité de stockage auxiliaire 23.

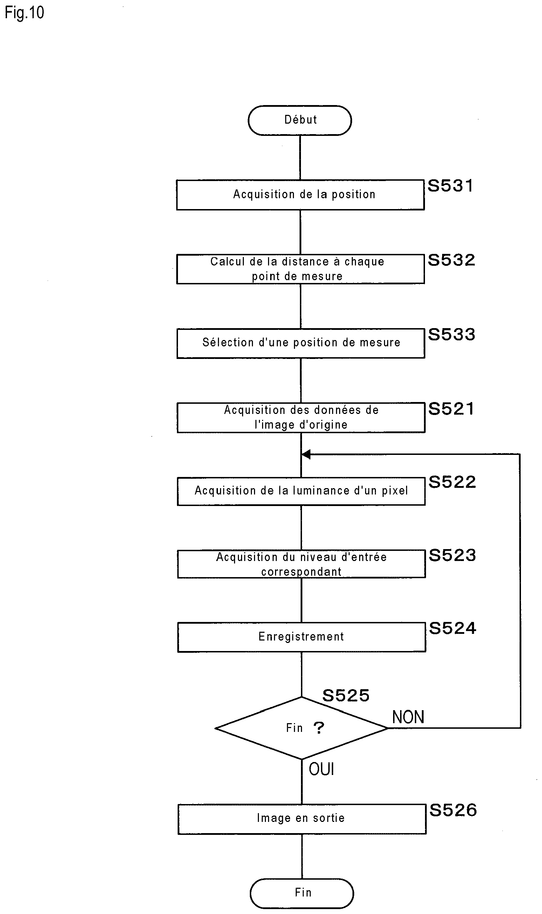

La figure 10 est un organigramme illustrant le flux de traitement du programme dans la phase d'utilisation de la configuration 2. L'unité centrale de traitement 21 obtient la position de la caméra 15 ou autre équipement à tester, par exemple, à partir d'une unité d'acquisition de position telle qu'un capteur de position ou équivalent (étape S531).

L'unité centrale 21 calcule la distance (étape S532) entre la position acquise à l'étape S531 et chacune des multiples positions de mesure pour lesquelles des informations de correction de luminance ont été précédemment créées. Une position de mesure en vue de la correction en luminance est sélectionnée par l'unité centrale de traitement 21 (étape S533). Le traitement ultérieur est effectué en utilisant la base de données de correction en luminance 52 correspondant à la position de mesure sélectionnée.

À l'étape S533, la position de mesure la plus proche de la position acquise à l'étape S531 peut être sélectionnée. À l'étape S533, plusieurs positions de mesure proches de la position acquise à l'étape S531 peuvent également être sélectionnées et la valeur de mesure à la position acquise à l'étape S531 peut être estimée par interpolation des données.

L'unité centrale 21 obtient les données de l'image originale à partir de l'unité de stockage auxiliaire 23 ou d'un autre serveur ou équipement similaire connecté via un réseau (étape S521). Le traitement ultérieur étant le même que le traitement effectué par le programme de la configuration 1 décrit à l'aide de la figure 9, la description en sera donc omise.

Selon la présente configuration, le système de traitement de l'information 10 peut être réalisé en sélectionnant la position de mesure la plus proche parmi une pluralité de positions de mesure afin d'effectuer la correction en luminance. A titre d'exemple d'application, le système de traitement de l'information 10 est capable d'afficher une image en luminance réelle même lorsque la position de la caméra à tester 15 est modifiée.

Dans l'étape S502 du programme décrit à l'aide de la figure 7, une image en luminance peut être affichée séparément pour chacune des trois couleurs primaires, R (Rouge), V (Vert), et B (Bleu). Une base de données des mesures réelles de luminance 51 ainsi qu'une base de données des corrections de luminance 52 peuvent être créées pour chacune de ces trois couleurs primaires. Il est possible de réaliser un système de traitement de l'information 10 qui empêche l'apparition d'un biais en couleur causé par une aberration chromatique, entre autres causes d'aberration.

### Configuration 3

La présente configuration concerne un système de traitement de l'information 10 qui superpose une image projetée sur un écran 33 à partir d'une pluralité de projecteurs 31. Les descriptions des parties communes avec la configuration 1 seront omises.

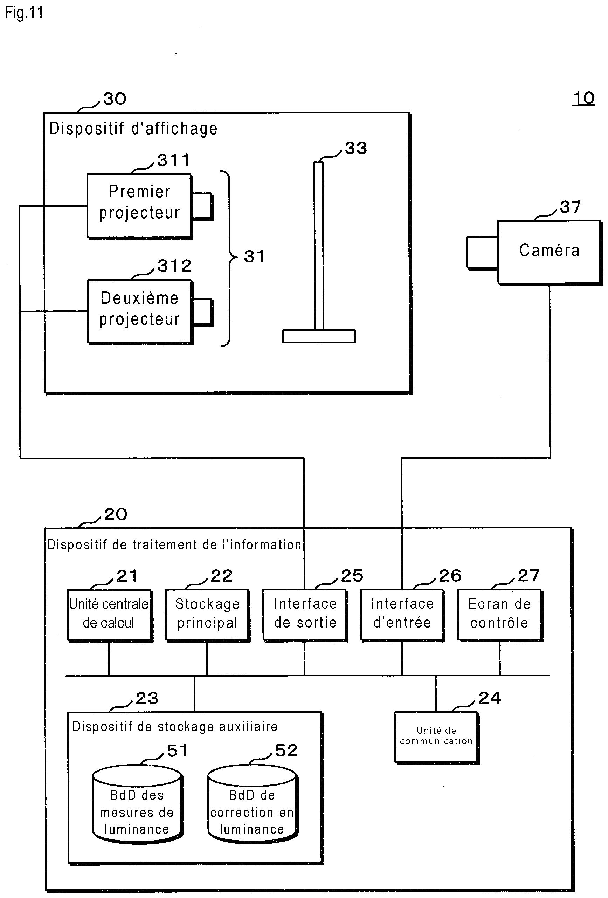

Dans cette configuration, l'étape de préparation comporte deux étapes : une étape d'acquisition de la déformation et une étape d'acquisition de la distribution de la luminance. La figure 11 est une illustration de la configuration du système de traitement de l'information 10 au stade de l'acquisition de la déformation pour la présente configuration 3.

Le système de traitement de l'information 10 en phase d'acquisition de la déformation est équipé d'un dispositif de traitement de l'information 20, d'un dispositif d'affichage 30 et d'un luminancemètre 36.

Le dispositif de traitement de l'information 20 est doté d'une unité centrale de calcul 21, d'une mémoire principale de stockage 22, d'un dispositif auxiliaire de mémoire de stockage 23, d'une unité de communication 24, d'une interface de sortie 25, d'une interface d'entrée 26, d'un écran de contrôle 27 et d'un bus. L'écran de contrôle 27 est un dispositif d'affichage à cristaux liquides ou similaire, par exemple, fourni dans le dispositif de traitement de l'information 20. Le dispositif de traitement de l'information 20 de la présente configuration peut être un ordinateur personnel ou une tablette à usage général ou tout autre appareil équivalent de traitement de l'information.

Le dispositif d'affichage 30 comprend un écran 33 et une pluralité de projecteurs 31, tels qu'un premier projecteur 311, un second projecteur 312, et ainsi de suite. Dans la description qui suit, les projecteurs individuels 31 seront appelés de façon générique projecteur 31 lorsqu'il n'est pas nécessaire de les distinguer. La disposition des projecteurs 31 sera décrite ci-dessous.

Une caméra 37 est connectée à l'interface d'entrée 26. La caméra 37 est disposée dans une position opposée au projecteur 31, devant l'écran 33 et face au projecteur 31. La caméra 37 peut être disposée du même côté que le premier projecteur 311 ou projecteur similaire mais de manière à ne pas bloquer le trajet de projection du projecteur 31. L'appareil photo ou caméra 37 est un appareil numérique à haute résolution.

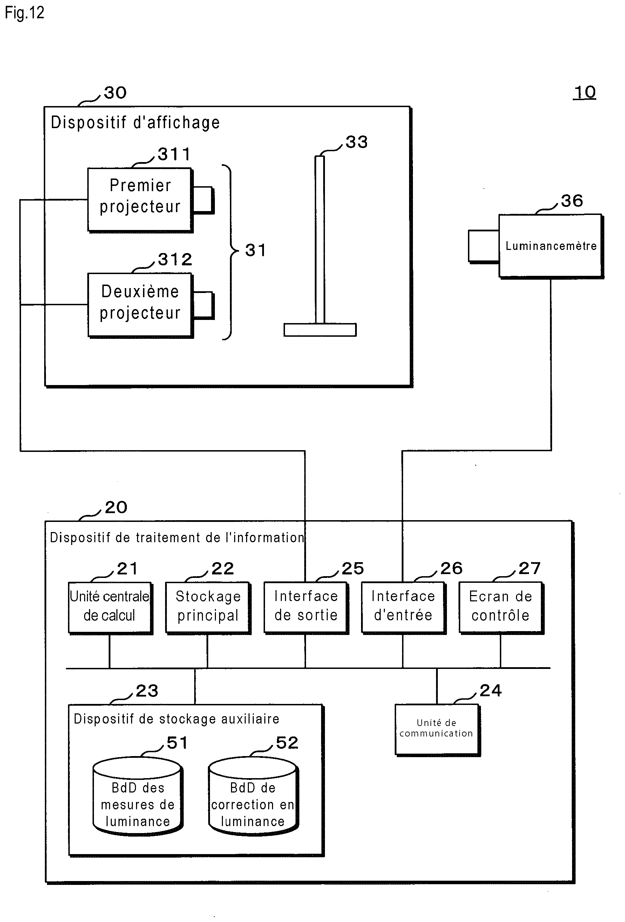

La figure 12 est une illustration de la configuration du système de traitement de l'information 10 dans l'étape d'acquisition de la distribution de luminance de la présente configuration 3. Lors de l'étape d'acquisition de la distribution de la luminance, la caméra 37 est remplacée par un luminancemètre 36.

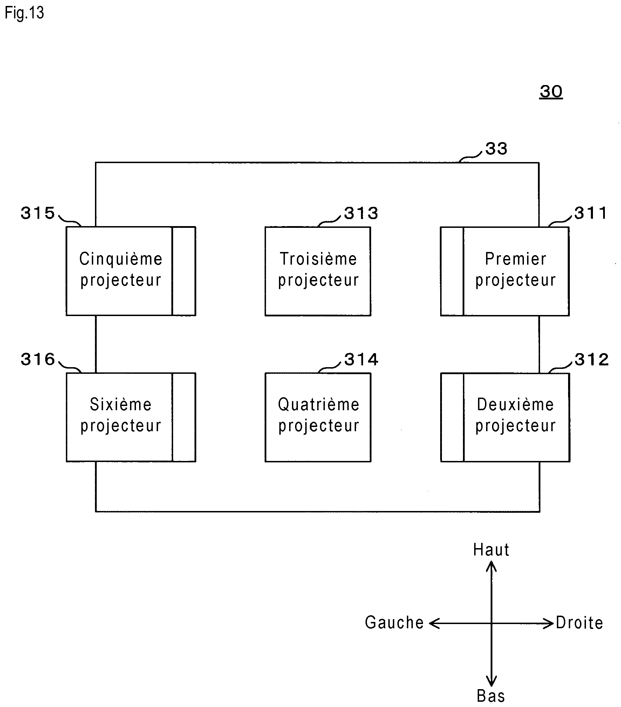

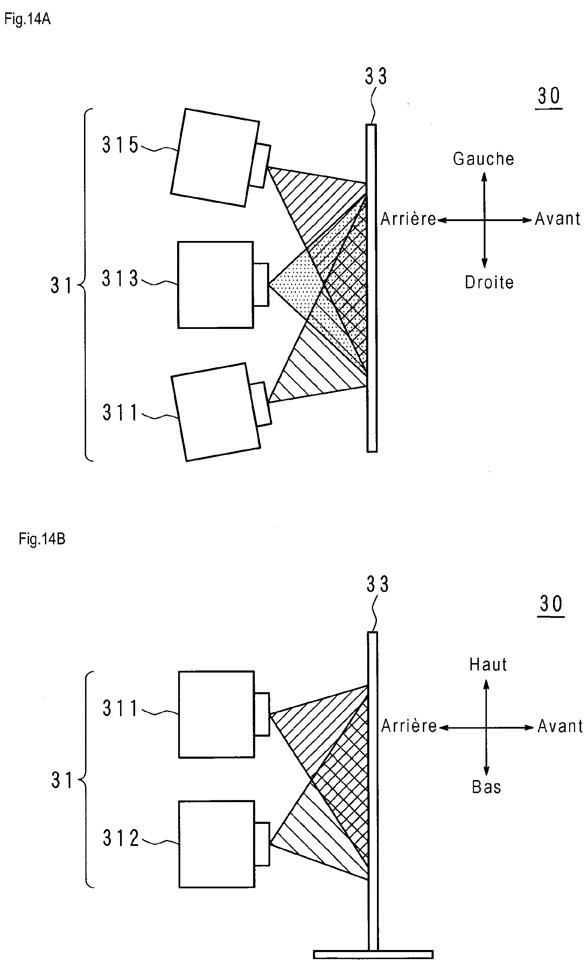

Les figures 13 et 14 illustrent la disposition des projecteurs 31 et de l'écran 33. La figure 13 est une vue des projecteurs 31 et de l'écran 33 depuis l'arrière des projecteurs 31. La figure 14A est une vue des projecteurs 31 et de l'écran 33 depuis le haut. La figure 14B est une vue des projecteurs 31 et de l'écran 33 depuis le côté droit. Les figures 14 montrent schématiquement l'état de projection de chaque projecteur 31 vers l'écran 33.

Dans la présente configuration, un total de six projecteurs 31 sont utilisés, en deux lignes de trois projecteurs de gauche à droite, c'est-à-dire en trois colonnes de deux projecteurs de haut en bas. Les projecteurs 31 aux deux extrémités dans la direction horizontale sont disposés en forme d'un éventail tronqué de sorte que l'axe de chacun de ces projecteurs 31 aux deux extrémités dans la direction horizontale soit orienté vers l'axe optique du projecteur 31 en position médiane.

Un groupe de plusieurs projecteurs 31 peut être logé dans un seul boîtier et fourni ainsi sous une forme intégrée qui paraisse être un projecteur unique. Lorsque des projecteurs sont ainsi fournis sous la forme d'un seul projecteur intégré, tout ou une partie du groupe de projecteurs 31 peut partager des composants optiques, tels que les lentilles de projection, les optiques de relais ou les modulateurs spatiaux de lumière, par exemple. La totalité ou une partie du groupe des projecteurs 31 peut également partager un même chemin optique. La totalité ou une partie du groupe des projecteurs 31 peut partager des circuits d'alimentation électrique, des circuits de commande et contrôle, et ainsi de suite.

Comme le montrent les figures 14, les projecteurs 31 sont réglés afin de projeter une image sur l'écran 33 dans une zone approximativement identique à l'écran 33 à l'aide d'une fonction de décalage de l'objectif, la mise au point étant également effectuée. La disposition des projecteurs 31 illustrée dans les figures 13 et 14 n'est qu'un exemple, sachant qu'un nombre quelconque de projecteurs 31 peut être placé dans n'importe quelle position.

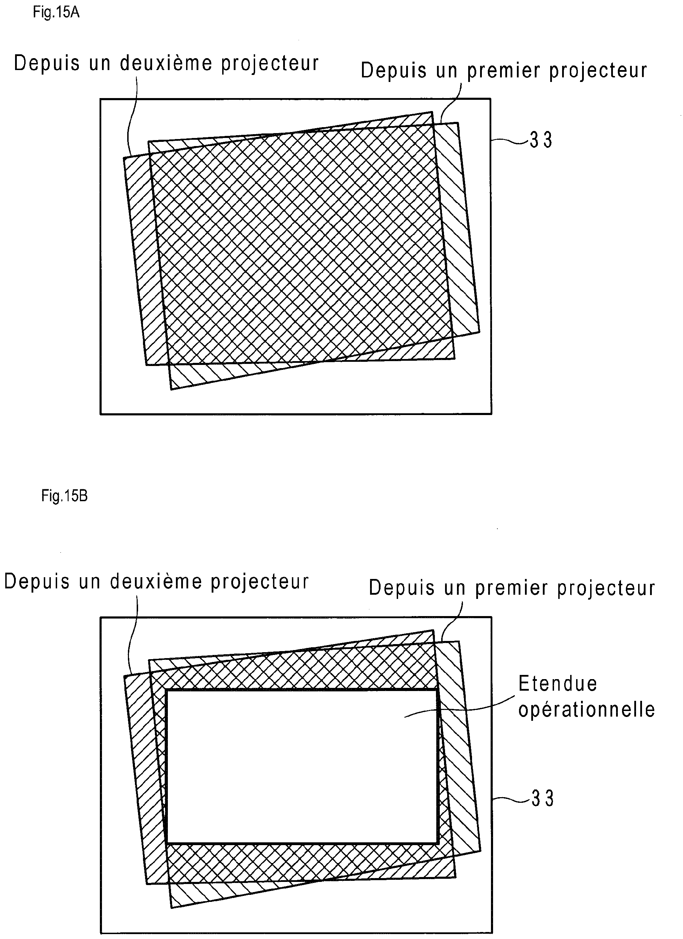

Les figures 15 sont une illustration de l'état de projection à partir des projecteurs 31. Dans les figures 15, seuls deux projecteurs 31, un premier projecteur 311 et un second projecteur 312, sont utilisés afin d'explication.

Même si la zone de projection de chacun des projecteurs 31 est ajustée afin de correspondre autant que possible à une zone commune de projection grâce à l'ajustement de la position d'installation et du déplacement de l'objectif de ces projecteurs 31, la zone de projection de ces projecteurs connaîtra des différences, comme le montre la figure 15A.

L'unité centrale 21 fait fonctionner les projecteurs 31 un par un et acquiert la zone de projection de chacun de ces projecteurs 31 par l'intermédiaire de la caméra 37. L'unité centrale 21 superpose la zone de projection de chaque projecteur 31 sur l'écran 27, comme indiqué dans la figure 15A, et l'affiche sur l'écran 27. L'utilisateur peut saisir l'étendue opérationnelle ou zone d'utilisation, par exemple en y faisant glisser une souris.

L'unité centrale 21 peut déterminer automatiquement l'étendue opérationnelle en calculant un rectangle d'un rapport d'aspect prédéterminé qui est inclus dans la zone de projection de chacun des projecteurs 31. Dans la description suivante, les coordonnées dans l'étendue opérationnelle seront utilisées pour indiquer la position sur l'écran 33.

L'étendue opérationnelle peut être définie comme la plage de projection commune à un nombre quelconque de projecteurs 31, par exemple, trois projecteurs ou davantage.

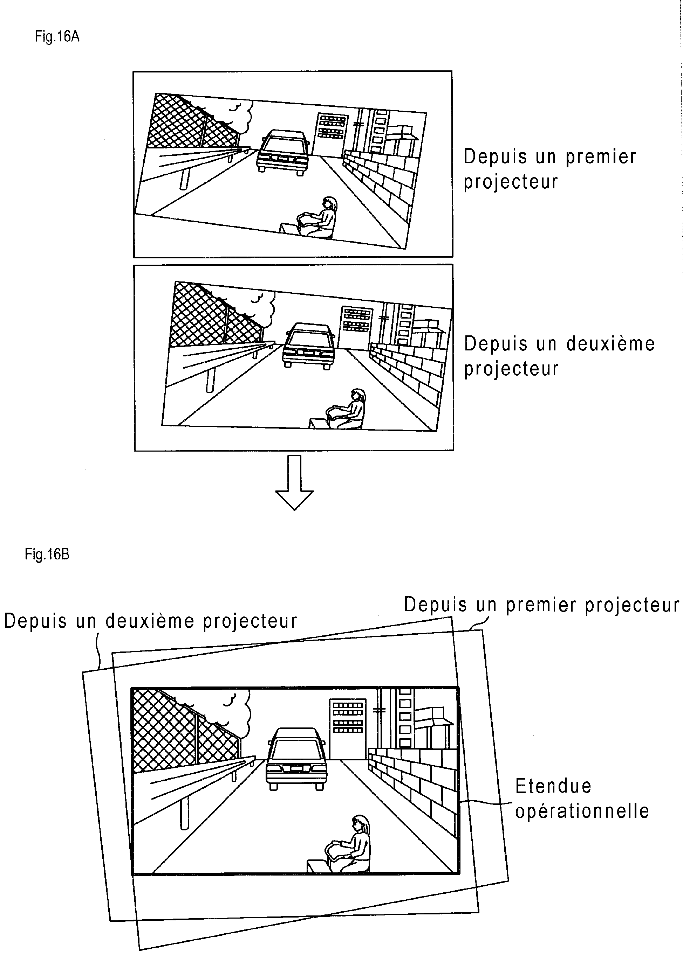

Les figures 16 illustrent l'état de projection des projecteurs 31. Dans la figure 16, deux projecteurs 31, un premier projecteur 311 et un second projecteur 312 sont utilisés afin d'explication.

L'unité centrale de calcul 21 transmet à chacun des projecteurs 31 les données d'image, qui sont transformées à partir de l'image originale de manière à projeter une image prédéterminée sur l'étendue opérationnelle. Les projecteurs 31 projettent les images d'entrée sur l'écran 33, comme le montre la figure 16A. Chaque image est superposée sur l'écran 33, ce qui donne une image de haute intensité dans l'étendue opérationnelle de l'écran 33.

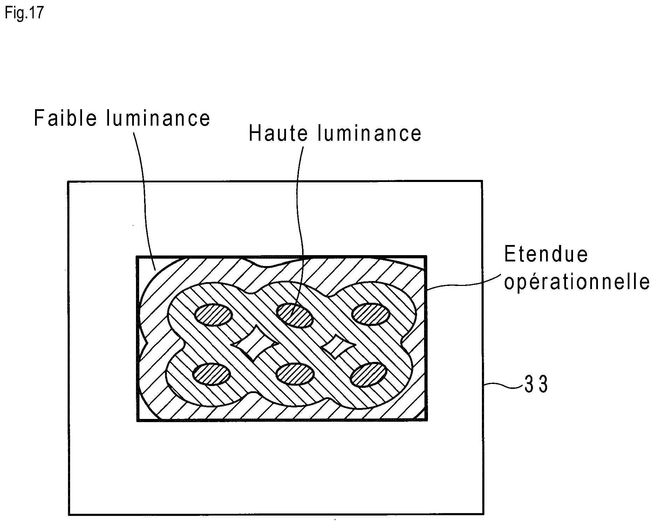

La figure 17 illustre un exemple de résultat de mesure de la luminance de la présente configuration 3. La figure 17 montre les résultats des mesures effectuées à l'aide d'un luminancemètre 36 lorsqu'une image grise uniforme est projetée simultanément par tous les projecteurs 31 vers une étendue opérationnelle. Le luminancemètre 36 est disposé de manière à mesurer la luminance de cette étendue opérationnelle. Comme le montre la figure 17, des plages de luminance élevée correspondent en nombre au nombre des projecteurs 31.

Comme dans le cas de la configuration 1, en introduisant les données d'image avec une distribution de luminance corrigée dans chacun des projecteurs 31, une image en luminance réelle peut être affichée sur l'écran 33. En outre, une telle image de forte luminance ne peut pas être reproduite par un seul projecteur 31 sur l'écran 33.

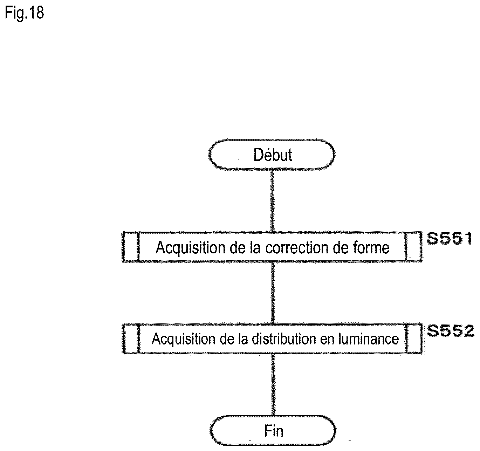

La figure 18 est un organigramme illustrant le déroulement du traitement du programme dans la phase préparatoire de la configuration 3. L'unité centrale 21 lance un sous-programme d'acquisition de la déformation (étape S551). Le sous-programme d'acquisition de la déformation est un sous-programme qui acquiert une étendue opérationnelle basée sur la portée de projection des différents projecteurs 31 et enregistre les informations de correction de forme qui transforment l'image à entrer dans les projecteurs 31 comme décrit à l'aide de la figure 15, et comme décrit à l'aide de la figure 16A. Le flux de traitement du sous-programme d'acquisition de la déformation est décrit ci-dessous.

L'unité centrale 21 lance un sous-programme pour obtenir la distribution de la luminance (étape S552). Le sous-programme d'acquisition de la distribution de la luminance est un sous-programme qui mesure la distribution de la luminance et crée une base de données de correction en luminance 52 comme décrit à l'aide de la figure 17. Le flux de traitement du sous-programme d'acquisition de la distribution de la luminance est décrit ci-dessous ; l'unité centrale 21 met ensuite fin au traitement.

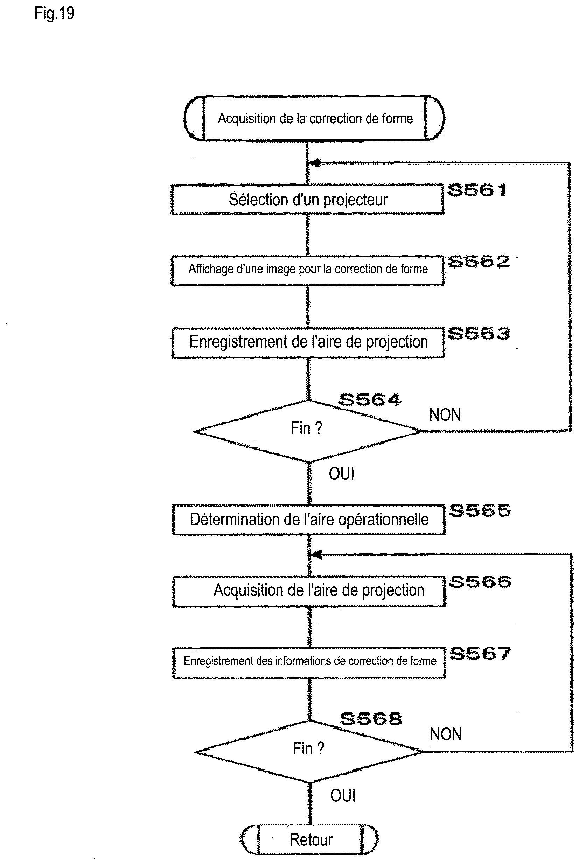

La figure 19 est un organigramme illustrant le flux de traitement du sous-programme d'acquisition de déformation : l'unité centrale 21 sélectionne un projecteur 31 (étape S561). L'unité centrale 21 affiche une image pour l'acquisition de déformation grâce à l'unité d'affichage 30 (étape S562). Par exemple, l'unité centrale 21 projette une image pour l'acquisition de la déformation qui a une valeur de luminosité maximale sur toute la surface projetée à partir du projecteur 31 via l'interface de sortie 25. Cela provoque l'affichage d'une image blanche sur l'écran 33.

L'image servant à l'acquisition de la déformation peut être n'importe quelle image, comme par exemple une image dite en damier dans laquelle des carrés blancs et des carrés noirs sont disposés en alternance. Dans l'explication qui suit, ce sera l'exemple du cas où une image entièrement blanche est utilisée en tant qu'image d'acquisition de la déformation.

L'unité centrale 21 acquiert l'aire de projection de l'image blanche par l'intermédiaire de la caméra 37 et l'enregistre dans le dispositif de stockage auxiliaire 23 (étape S563) . L'unité centrale 21 détermine ensuite si le traitement pour tous les projecteurs 31 est terminé ou non (étape S564). S'il est déterminé que le traitement n'est pas terminé, l'unité centrale 21 revient à l'étape S561.

S'il est déterminé que le traitement est terminé, l'unité centrale 21 détermine l'étendue opérationnelle décrite à la figure 15B (étape S565). L'unité centrale 21 peut déterminer l'étendue opérationnelle en prenant en compte, par exemple, les données entrées par l'utilisateur ; mais l'unité centrale 21 peut également déterminer l'étendue opérationnelle en calculant automatiquement un rectangle d'un rapport d'aspect prédéterminé qui est inclus dans l'aire de projection pour chacun des projecteurs 31.

L'unité centrale 21 obtient l'aire de projection enregistrée à l'étape S563 pour un projecteur 31. L'unité centrale 21 corrige l'image projetée sur l'écran 33 en déformant l'image originale comme décrit à la figure 16A, en fonction de l'aire de projection acquise, de l'étendue opérationnelle déterminée à l'étape S565 et des informations de correction de forme. Les informations de correction de forme sont calculées et stockées dans le dispositif de stockage auxiliaire 23 (étape S567). Les informations de correction de forme peuvent être représentées, par exemple, par une matrice qui déforme l'image par une transformation de coordonnées. La méthode de déformation de l'image utilisée est une méthode conventionnelle et n'est donc pas décrite.

L'unité centrale 21 détermine si le traitement de tous les projecteurs 31 est terminé ou non (étape S568). S'il est considéré non terminé (NON à l'étape S568), l'unité centrale 21 revient à l'étape S566. Si il est considéré terminé (OUI à l'étape S568), l'unité centrale 21 met fin au traitement.

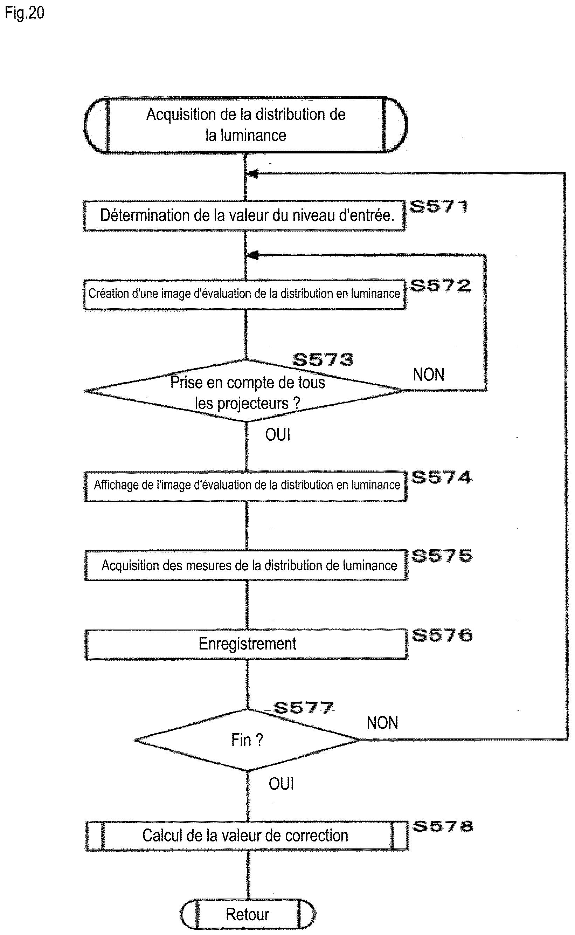

La figure 20 est un organigramme illustrant le déroulement du sous-programme d'acquisition de la distribution de la luminance. Le sous-programme d'acquisition de la distribution de luminance est un sous-programme qui mesure la distribution de luminance décrite à l'aide de la figure 17 et crée une base de données de correction en luminance 52.

L'unité centrale 21 détermine une valeur du niveau d'entrée (étape S571). Une valeur arbitraire peut être déterminée pour la valeur de l'intervalle du niveau d'entrée, par exemple, tous les dix niveaux élémentaires. L'unité centrale 21 crée une image d'évaluation de la distribution de la luminance sur la base des informations de correction de forme stockées dans le dispositif de stockage auxiliaire 23 (étape S572). Plus précisément, l'unité centrale 21 crée les données d'image pour projeter l'image de la valeur du niveau d'entrée déterminée à l'étape S571 sur l'étendue opérationnelle décrite à l'aide de la figure 15B, et stocke les données d'image dans le dispositif de stockage auxiliaire 23.

L'unité centrale 21 détermine si le traitement pour tous les projecteurs 31 est terminé ou non (étape S573). S'il est déterminé qu'il n'est pas terminé (NON à l'étape S573), l'unité centrale 21 revient à l'étape S572.

Si le traitement est jugé terminé (OUI à l'étape S573), l'unité centrale 21 affiche l'image d'évaluation de la distribution en luminance (étape S574). Plus précisément, l'unité centrale 21 transmet les données de l'image d'évaluation de la distribution en luminance créée à l'étape S572 aux projecteurs 31 via l'interface de sortie 25. Les projecteurs 31 projettent l'image sur l'écran 33 sur la base des données d'entrée de l'image. L'image projetée par chaque projecteur 31 est superposée à l'étendue opérationnelle décrite à l'aide de la figure 15. Avec ce qui précède, l'image d'évaluation de la distribution en luminance est affichée sur l'écran 33.

L'unité centrale 21 acquiert les valeurs mesurées de la distribution de la luminance par le luminancemètre 36 via l'interface 26 (étape S575). L'unité centrale 21 enregistre les valeurs mesurées dans les champs correspondant aux valeurs de niveau d'entrée déterminées à l'étape S571 pour chaque position de coordonnées dans la base de données des mesures réelles de la luminance 51 (étape S576) .

La relation entre la valeur du niveau en entrée et la luminance sur l'écran 33 est la même pour n'importe quelle position sur l'écran 33. Par conséquent, en affichant une seule image d'évaluation de la distribution en luminance sur l'écran 33 et en mesurant la luminance, la relation entre la valeur de niveau d'entrée de chaque projecteur 31 et la luminance sur l'écran 33 peut être obtenue pour créer une base de données des mesures réelles de la luminance 51. En utilisant les données relatives aux valeurs de niveau d'entrée de chaque projecteur 31 et les données de luminance sur l'écran 33, l'affichage en luminance réelle peut être effectué avec une grande précision.

L'unité centrale 21 détermine si la mesure de la valeur du niveau d'entrée prédéterminé a été effectuée ou non (étape S577). Si l'on juge que la mesure n'est pas terminée (NON à l'étape S577), le processeur revient à l'étape S571. Si l'on estime que la mesure est terminée (OUI à l'étape S577), l'unité centrale 21 lance le sous-programme de calcul de la valeur de correction (étape S578). Le sous-programme de calcul de la valeur de correction est le même que celui décrit à la figure 8. L'unité centrale met ensuite fin au processus.

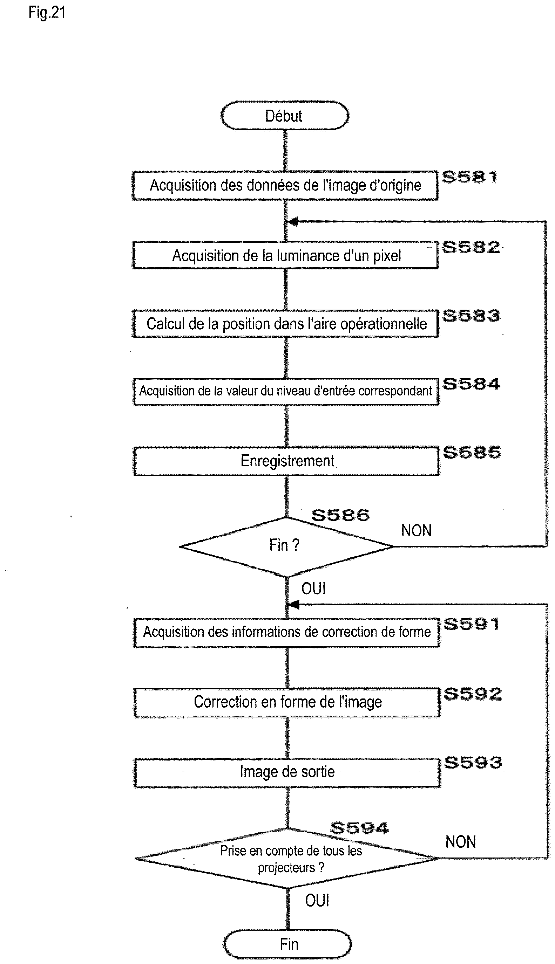

La figure 21 est un organigramme illustrant le déroulement du traitement d'un programme au stade de l'utilisation de la configuration 3. L'unité centrale 21 obtient les données de l'image originale à partir du dispositif de stockage auxiliaire 23 ou d'un autre serveur ou équipement similaire connecté via un réseau (étape S581). Les données de l'image originale sont des données d'image en luminance réelle comprenant donc des informations sur la luminance réelle.

L'unité centrale 21 acquiert la valeur de luminance d'un pixel dans l'image acquise à l'étape S581 (étape S582). L'unité centrale 21 calcule, pour le pixel à partir duquel la luminance est acquise, la position dans l'étendue opérationnelle décrite à l'aide de la figure 15B (étape S583). L'unité centrale 21 obtient la valeur du niveau d'entrée correspondant à la luminance calculée à l'étape S582 en se référant à la base de données de correction en luminance 52 (étape S584). Pour ce faire, l'unité centrale 21 effectue une interpolation basée sur la base de données de correction en luminance 52 et calcule les valeurs de niveau d'entrée correspondant à la position concernée et affiche les valeurs de luminance calculées à l'étape S583.

L'unité centrale 21 enregistre les valeurs de niveau d'entrée obtenues à l'étape S584 par rapport aux positions calculées à l'étape S583 (étape S585). L'unité centrale 21 détermine si le traitement pour tous les pixels des données de l'image originale a été achevé ou non (étape S586). S'il est déterminé que le traitement n'est pas terminé (NON à l'étape S586), l'unité centrale revient à l'étape S582.

Si le traitement est considéré comme terminé (OUI à l'étape S586), l'unité centrale 21 obtient les informations de correction de forme correspondant à un projecteur 31 de la part du dispositif de stockage auxiliaire 23 (étape S591). Au cours de cette étape S591, l'unité centrale 21 réalise la fonction attribuée à la troisième unité d'acquisition dans la présente configuration.

L'unité centrale 21 transforme les données d'image formées par les valeurs de niveau d'entrée pour chaque pixel enregistré à l'étape S585 en fonction des informations de correction de forme (étape S592). Au cours de cette étape S592, l'unité centrale 21 réalise la fonction attribuée à l'unité de correction de forme de la configuration actuelle.

L'unité centrale 21 transmet les données d'image issue de l'étape S592 aux projecteurx 31 via l'interface de sortie 25 (étape S593). Les projecteurs 31 projettent une image sur l'écran 33 sur la base des données d'entrée de l'image.

L'unité centrale 21 détermine si le traitement pour tous les projecteurs 31 est terminé ou non (étape S594). Si elle détermine qu'il n'est pas terminé (NON à l'étape S594), l'unité centrale revient à l'étape S591. Si le traitement est considéré comme terminé (OUI à l'étape S594), l'unité centrale 21 met fin au traitement.

La présente configuration, dans la mesure où l'image est projetée par plusieurs projecteurs 31 pour sur tout une étendue opérationnelle, le dispositif de traitement de l'information 20 peut fournir un dispositif d'affichage en luminance réelle alors qu'un seul projecteur serait limité à une partie seulement en luminance élevée.

Dans le sous-programme permettant d'obtenir la distribution de luminance décrite à l'aide de la figure 20, une base de données de correction en luminance 52 peut être créée pour l'utilisation d'un ou plusieurs projecteurs 31. Par exemple, pour une image relativement sombre, un nombre réduit de projecteurs 31 peut être utilisé pour obtenir une image relativement sombre, et tous les projecteurs 31 peuvent être utilisés pour une image comprenant une partie de luminance élevée.

En utilisant le nombre minimum requis de projecteurs 31, il est possible de réaliser une unité de traitement de l'information 20 qui affiche des images de faible luminance mais en luminance réelle et précise. Il est ainsi possible d'économiser la consommation électrique et de prolonger la durée de vie des projecteurs 31.

Pour l'affichage d'une même image, tous les projecteurs 31 peuvent être utilisés pour les zones qui comprennent une partie de forte luminance, alors qu'un ou plusieurs projecteurs 31 peuvent être utilisés pour les autres parties de l'image. Comme aucune projection superposée n'est effectuée sur les parties à faible luminosité, le système de traitement de l'information 10 peut être fourni pour afficher une image de haute résolution.

### Configuration 4

La présente configuration concerne un système de traitement de l'information 10 qui utilise des projecteurs auxiliaires 32 qui projettent une image sur une partie seulement de l'étendue opérationnelle. La description des parties communes à la configuration 3 est omise.

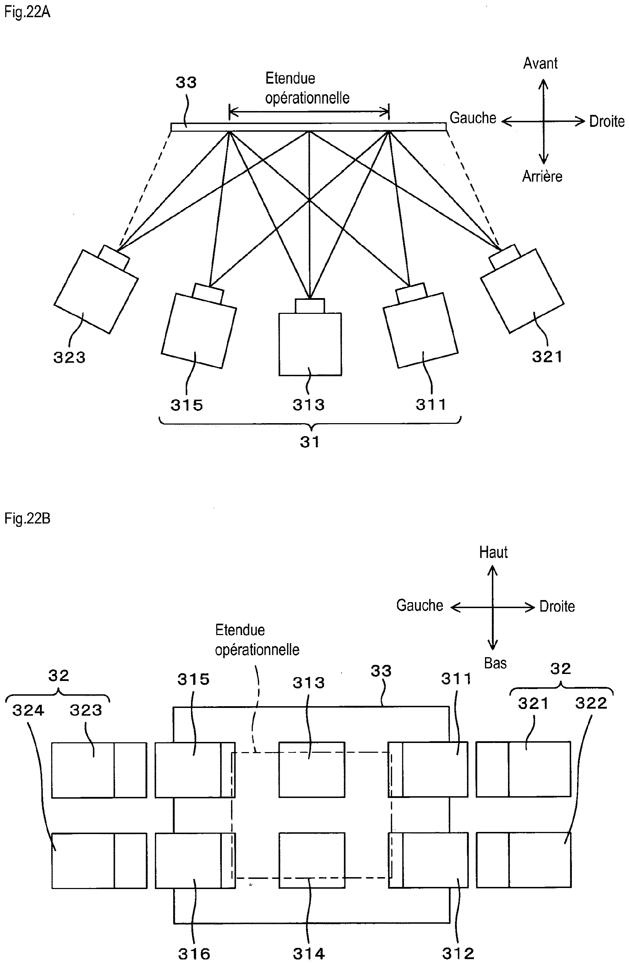

La figure 22 illustre la disposition des projecteurs 31 et de l'écran 33 de la présente configuration 4. La figure 22A est une vue des projecteurs 31, des projecteurs auxiliaires 32 et de l'écran 33 depuis le haut desdits projecteurs 31, des projecteurs auxiliaires 32 et de l'écran 33. La figure 22B est une vue des projecteurs 31, des projecteurs auxiliaires 32 et de l'écran 33 depuis l'arrière des projecteurs 31.

Dans cette configuration, deux projecteurs auxiliaires 2 sont disposés en éventail tronqué de chaque côté des six projecteurs 31 eux-mêmes disposés de la même manière que dans le cas de la configuration 3.

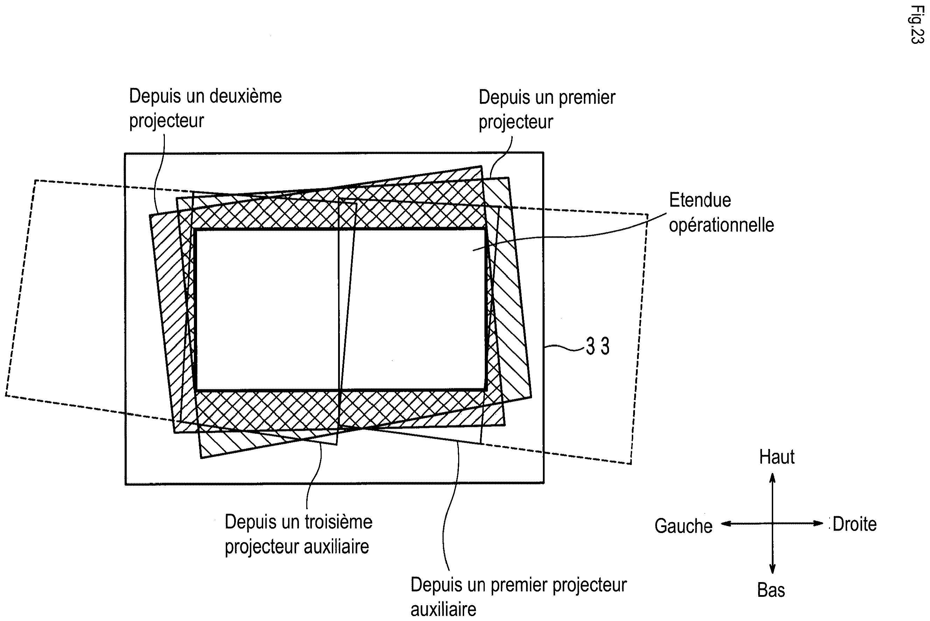

La figure 23 est une illustration de l'état de projection des projecteurs 31 dans le cas de la présente configuration 4. Les figures 22 et 23 seront utilisées pour expliquer la portée de projection des projecteurs 31 dans cette configuration.

Les six projecteurs 31, du premier projecteur 311 au sixième projecteur 316, sont capables de projeter une image sur une zone qui comprend l'étendue opérationnelle.

Les premier et deuxième projecteurs auxiliaires 321 et 322, situés sur le côté droit, projettent l'image sur la moitié droite de l'étendue opérationnelle ainsi tronquée. Comme le montrent les lignes en pointillés de la figure 22A et de la figure 23, la moitié droite de la surface projetable des premier et deuxième projecteurs auxiliaires 321 et 322 n'est pas utilisée.

De même, les troisième et quatrième projecteurs auxiliaires 323 et 324, situés sur le côté gauche, projettent des images sur la moitié gauche de l'étendue opérationnelle ainsi tronquée. Comme le montrent les lignes en pointillés des figures 22A et 23, la moitié gauche de la zone de projection des troisième et quatrième projecteurs auxiliaires 323 et 324 n'est pas utilisée.

Dans la présente configuration, le système de traitement de l'information 10 peut devenir un système de traitement capable d'afficher des luminances élevées en luminance réelle même près des bords de l'étendue opérationnelle.

Dans la présente configuration, le système de traitement de l'information 10 peut devenir un système de traitement capable d'afficher une image à forte luminance en luminance réelle sur une aire très étendue.

Le nombre de projecteurs auxiliaires 32 peut être inférieur à trois ou supérieur à cinq. Les projecteurs auxiliaires 32 peuvent être placés à n'importe quel endroit. La taille de l'aire de projection des projecteurs auxiliaires 32 peut être différente de la taille de l'aire de projection des projecteurs 31.

### Configuration 5

La présente configuration concerne un système de traitement de l'information 10 comportant plusieurs écrans 33. La description des parties communes à la configuration 3 est omise.

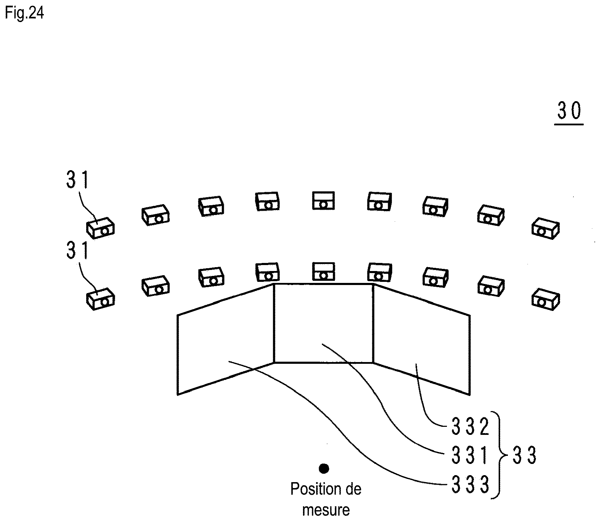

La figure 24 illustre la disposition des projecteurs 31 et de l'écran 33 dans le cas de la configuration 5. Le dispositif d'affichage 30 de cette configuration comprend un premier écran 331. Un deuxième écran 332 est disposé consécutivement sur un côté du premier écran 331, et un troisième écran 333 est disposé consécutivement sur un côté opposé du premier écran 331. Dans la description qui suit, les écrans 331 à 333 seront appelés écrans 33 lorsqu'il n'est pas nécessaire de les distinguer.

En arrière de chaque écran 33, il y a six projecteurs 31, chacun de ces groupes étant situé en arrière de chaque écran 33. L'axe optique de chaque projecteur 31 est disposé de manière à ce que cet axe optique soit orienté vers la position de mesure.

Ainsi, une image horizontale dite panoramique à luminosité réelle est projetée à partir d'un total de dix huit projecteurs 31, successivement sur les trois écrans 33.

Dans la présente configuration, il est possible de fournir un système de traitement de l'information 10 capable d'évaluer une caméra 15 à tester sous un grand angle. Comme l'axe arrière de chaque projecteur 31 est orienté vers la position de mesure, le système de traitement de l'information 10 peut devenir un système de traitement capable d'afficher une image à haute luminosité en luminosité réelle.

L'écran 33 peut être composé de quatre écrans ou plus. L'écran 33 peut également être connecté dans le sens vertical.

L'écran 33 peut être courbe. Cela peut permettre de constituer un système de traitement de l'information 10 qui soit moins affecté par les ruptures d'angle de l'écran 33.

### Configuration 6

La présente configuration concerne un système de traitement de l'information 10 dans lequel un utilisateur humain observe visuellement une image en luminance réelle. La description des parties communes à la configuration 3 est omise.

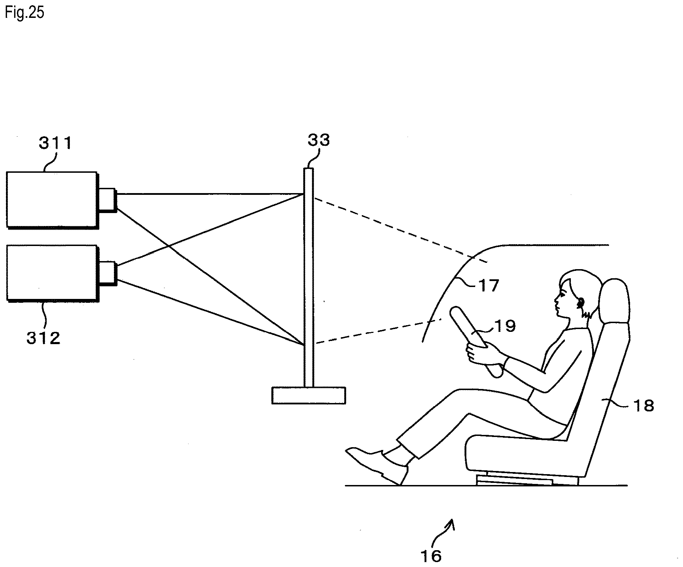

La figure 25 est une illustration à titre d'exemple de la configuration du système de traitement de l'information 10 dans le cas de la présente configuration 6. Le siège 18 du véhicule est disposé de manière à ce que les yeux de l'utilisateur soient placés près de la position de mesure lorsqu'il est assis. Le pare-brise 17, le volant 19, le tableau de bord, etc. sont disposés en fonction de la position du siège 18.

Une image de luminance réelle est affichée sur l'écran 33. L'utilisateur peut, par exemple, évaluer la visibilité du tableau de bord lorsqu'il est frappé par les phares d'un véhicule venant en sens inverse, par le soleil rasant du matin ou par le soleil couchant, etc. L'utilisateur peut également évaluer la visibilité d'un système de vision à tête haute "HUD", qui projette diverses informations sur le pare-brise 17.

Dans la présente configuration, un système de traitement de l'information 10 peut effectuer un affichage en luminance réelle pour servir de visuel à un simulateur de conduite qui permette, par exemple, de faire l'expérience de phénomènes tels que l'éblouissement causé par les phares d'un véhicule venant en sens inverse.

### Configuration 7

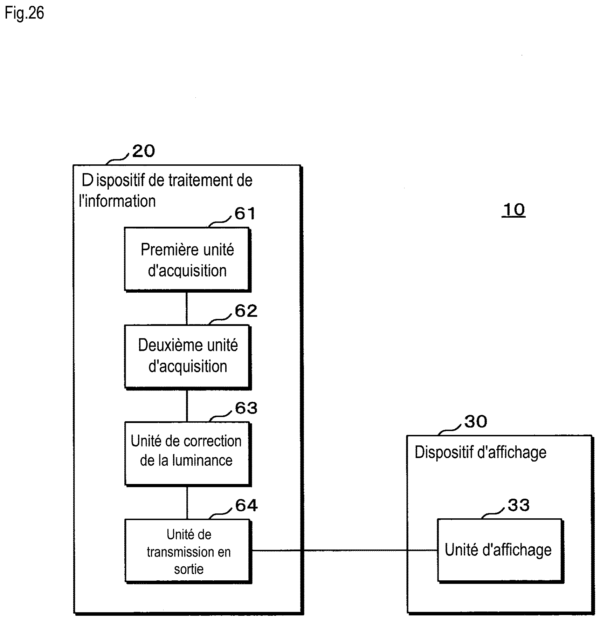

La figure 26 est un schéma fonctionnel illustrant le fonctionnement du dispositif de traitement de l'information 20 dans le cas de la configuration 7. Le dispositif de traitement de l'information 20 fonctionne sur la base d'un contrôle par une unité centrale de calcul 21, comme suit.

Le système de traitement de l'information 10 comprend un dispositif d'affichage 30 et un dispositif de traitement de l'information 20. Le dispositif d'affichage 30 possède une unité d'affichage 33 qui affiche une image. Le dispositif de traitement de l'information 20 possède une première unité d'acquisition 61, une deuxième unité d'acquisition 62, une unité de correction de la luminosité 63 et une unité de transmission en sortie 64.

La première unité d'acquisition 61 acquiert des informations de correction de luminance qui corrigent la luminance mesurée à partir d'une position de mesure prédéterminée sur l'unité d'affichage de l'image en fonction du signal d'entrée pour qu'elle corresponde aux informations de luminance contenues dans le signal d'entrée. La deuxième unité d'acquisition 62 acquiert une image à afficher sur l'unité d'affichage 33. L'unité de correction de la luminosité 63 corrige l'image acquise par la deuxième unité d'acquisition 62 sur la base des informations de correction acquises par la première unité d'acquisition 61. L'unité de transmission en sortie 64 transmet l'image corrigée par l'unité de correction de la luminosité à ladite unité d'affichage.

### Configuration 8

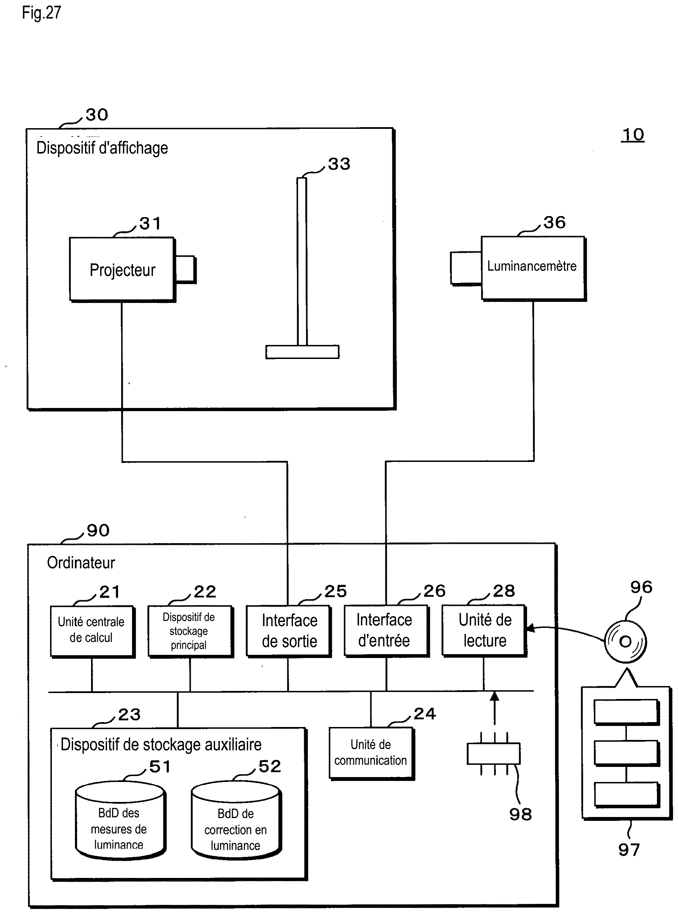

La présente configuration se rapporte à une forme de réalisation du système de traitement de l'information 10 qui associe un ordinateur polyvalent 90 à un programme 97 pour son fonctionnement. La figure 27 est une illustration de la configuration d'un tel système de traitement de l'information 10 correspondant à la présente configuration 8. La description des parties communes avec la configuration 1 est omise.

Le système de traitement de l'information 10 de la présente version comprend un ordinateur 90, un dispositif d'affichage 30 et un luminancemètre 36.

L'ordinateur 90 se compose d'une unité centrale 21, d'un dispositif de stockage principal 22, d'un dispositif de stockage auxiliaire 23, d'une unité de communication 24, d'une interface en sortie 25, une inetrface d'entrée 26, une unité de lecture 28 et un bus. L'ordinateur 90 peut être un ordinateur personnel polyvalent, une tablette ou un autre dispositif d'information.

Le programme 97 est enregistré sur un support de stockage portable 96. L'unité centrale 21 lit le programme 97 grâce à l'unité de lecture 28 et stocke le programme 97 dans un dispositif de stockage auxiliaire 23. L'unité centrale 21 peut également lire le programme 97 stocké dans une mémoire à semi-conducteurs 98, ou bien une mémoire flash montée dans l'ordinateur 90. En outre, l'unité centrale 21 peut télécharger le programme 97 à partir de l'unité de communication 24 ou un autre serveur ou équipement similaire non indiqué, qui soit connecté via l'unité de communication 24 à un réseau non indiqué, et stocker le programme 97 dans le dispositif de stockage auxiliaire 23.

Le programme 97 est installé comme programme de contrôle de l'ordinateur 90 et est chargé dans le dispositif de stockage principal 22 pour être exécuté. Cela permet à l'ordinateur 90 de fonctionner en tant que dispositif de traitement de l'information 20 décrit ci-dessus.

### Configuration 9

La présente configuration concerne une forme dans laquelle les coordonnées d'une image à projeter à partir des projecteurs 31, les coordonnées dans l'étendue opérationnelle décrite à l'aide de la figure 15, et les données de l'image originale sont converties de manière séquentielle à l'aide d'une base de données de conversion. Les parties communes à la configuration 3 seront omises dans la description.

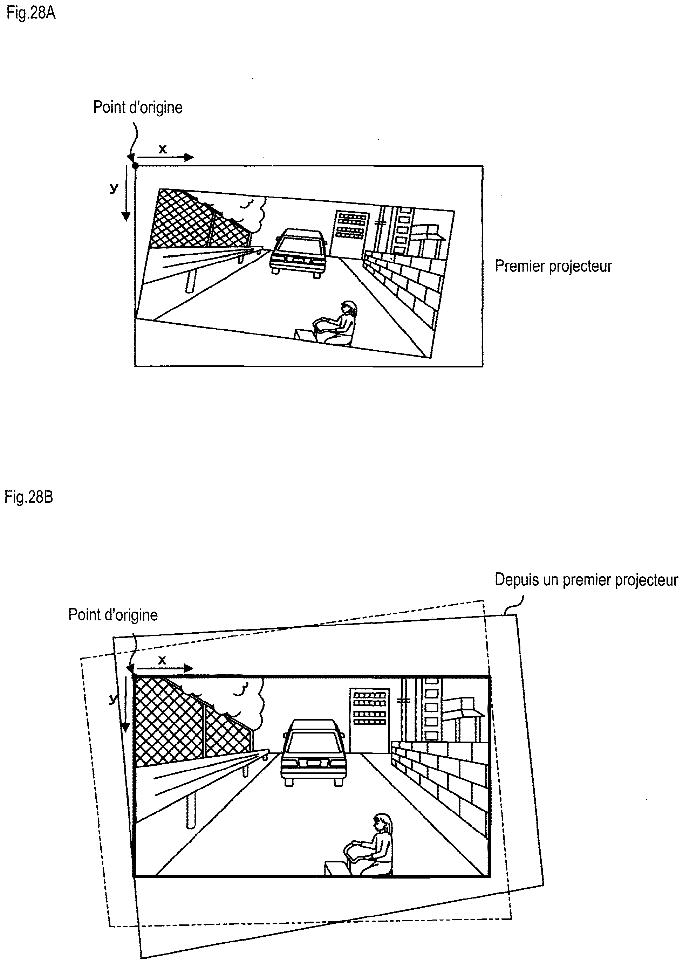

La figure 28 illustre la conversion entre les coordonnées d'une image à projeter à partir des projecteurs 31 et les coordonnées d'une étendue opérationnelle. La figure 28A montre les coordonnées de l'image entrée dans le premier projecteur 311, c'est-à-dire les coordonnées de ce projecteur. Le coin supérieur gauche de l'image est défini comme l'origine (0, 0), avec l'axe des x tourné vers la droite et l'axe des y tourné vers le bas. Par exemple, en utilisant le premier projecteur 311 avec des pixels de forme carrée à une résolution de 1080p, x est un entier de 0 à 1919 et y est un entier de 0 à 1079.

La figure 28B montre les coordonnées de l'étendue opérationnelle. Avec le coin supérieur gauche de l'étendue opérationnelle comme origine (0, 0), l'axe des x est défini dans la direction de la droite et l'axe des y dans la direction du bas. Par exemple, si la distribution de la luminance de l'étendue opérationnelle décrite à la figure 17 est mesurée selon une résolution de 2048 pixels par 1080 pixels, x est un entier de 0 à 2047 et y est un entier de 0 à 1079.

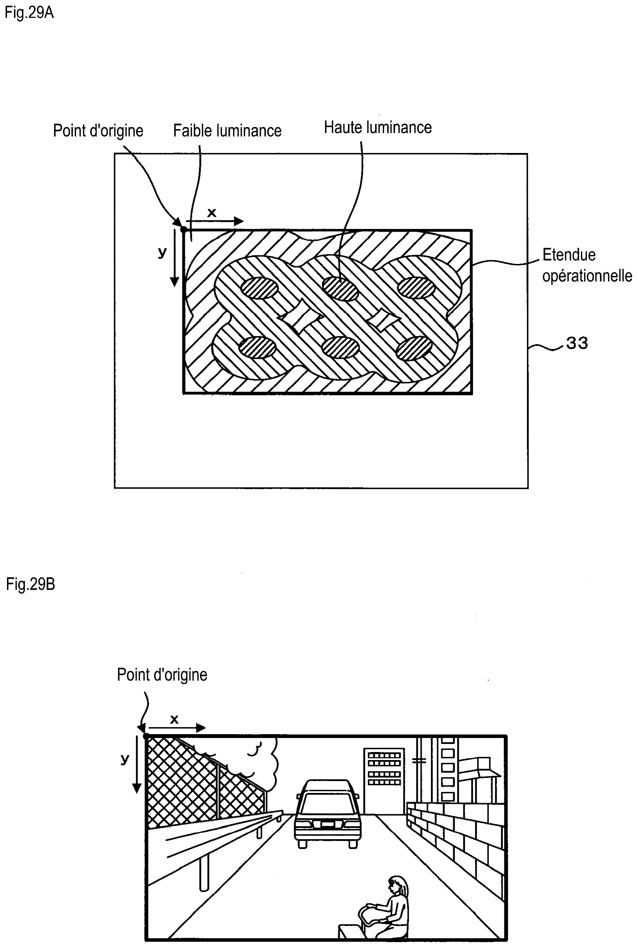

La figure 29 illustre la conversion entre les coordonnées de l'étendue opérationnelle et les coordonnées des données de l'image originale. La figure 29A montre les coordonnées de l'étendue opérationnelle. Comme dans la figure 28B, l'axe des x est défini vers la droite et l'axe des y est défini vers le bas, avec le coin supérieur gauche de l'étendue opérationnelle comme origine (0, 0).

La figure 29B montre les coordonnées des données de l'image originale. Le coin supérieur gauche des données de l'image originale est défini comme l'origine (0, 0), l'axe x étant orienté vers la droite et l'axe y vers le bas. Par exemple, si les données de l'image originale sont un pixel de forme carrée à une résolution de 1080p, x est un entier de 0 à 1919 et y est un entier de 0 à 1079.

Tous les nombres de pixels décrit à l'aide des figures. 28 et 29 sont donnés à titre d'exemple. L'image à projeter à partir des projecteurs 31, l'étendue opérationnelle et les données de l'image originale peuvent différer les unes des autres en ce qui concerne le rapport entre leur hauteur et leur largeur.

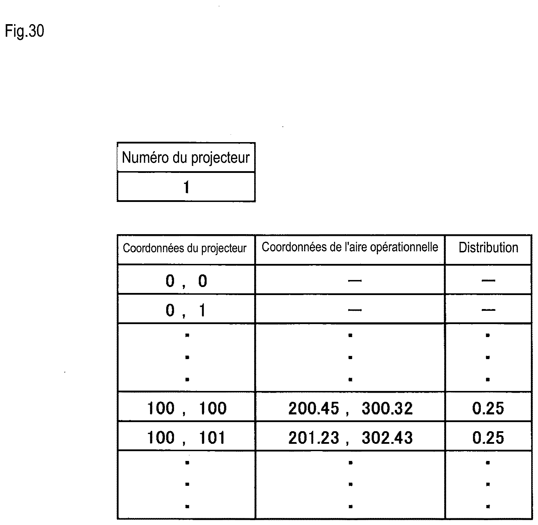

La figure 30 illustre la structure des enregistrements de la première base de données de conversion. La première base de données de conversion est une base de données qui enregistre les coordonnées du projecteur d'une image à projeter à partir des projecteurs 31, les coordonnées de l'étendue opérationnelle et la distribution de la luminance entre chaque projecteur 31 en association avec les coordonnées du projecteur, les coordonnées de l'étendue opérationnelle et l'attribution de la luminance à chaque projecteur 31. La première base de données de conversion comporte un champ de numéro de projecteur, un champ de coordonnées du projecteur, un champ des coordonnées de l'étendue opérationnelle et un champ de distribution de la luminance.

Le champ du numéro du projecteur enregistre le numéro donné à chacun des projecteurs 31 selon un ordre séquentiel. Le champ des coordonnées du projecteur enregistre chaque coordonnée de l'image à projeter à partir de chacun des projecteurs 31 comme décrit à l'aide de la figure 28A. Le champ de coordonnées de l'étendue opérationnelle enregistre les coordonnées de l'étendue opérationnelle décrite à l'aide de la figure 28B.

Comme le montre la figure 28, la zone proche de l'origine des coordonnées du projecteur n'est pas incluse dans la plage d'utilisation. Pour ces coordonnées, un symbole "-" est enregistré dans le champ de coordonnées de l'étendue opérationnelle. Dans la figure 30, le point où les coordonnées du projecteur sont "100, 100" dans le premier projecteur 311 indique que le point où les coordonnées du projecteur sont " 100, 100" est projeté à un point de l'étendue opérationnelle dont les coordonnées sont "200.45, 300.32".

Dans la zone de distribution, la distribution de la luminance entre les projecteurs 31 est enregistrée. Dans la figure 28, pour la position des coordonnées du projecteur "100, 100" pour le premier projecteur 311, le chiffre "0,25" enregistré dans le champ de distribution signifie que 25 pour cent de la luminance totale est attribuée au premier projecteur 311. Si le projecteur est hors de portée et ne projette pas de lumière, un symbole "-" est enregistré dans le champ de distribution.

La valeur du champ de distribution est déterminée de manière à ce que la somme soit de 1 pour chaque position dans l'étendue opérationnelle. S'il existe un mélange de projecteurs 31 entre des projecteurs 31 à haute et à basse luminance, les caractéristiques de chaque projecteur 31 peuvent être utilisées efficacement en augmentant la valeur du champ de distribution des projecteurs 31 à haute luminance.

La valeur du champ de distribution peut être définie de manière à ce que la valeur du champ de distribution soit proportionnelle à la luminance maximale que chaque projecteur 31 peut apporter pour chaque position dans l'étendue opérationnelle. Cette définition permet de réduire le nombre de mesures de la distribution de la luminance et de réaliser un système de traitement de l'information 10 qui peut afficher la luminance réelle avec un petit nombre d'opérations. Dans la description suivante de la présente configuration, un exemple de cas où la répartition de la luminance est enregistrée dans le champ d'attribution sera utilisé pour l'explication.

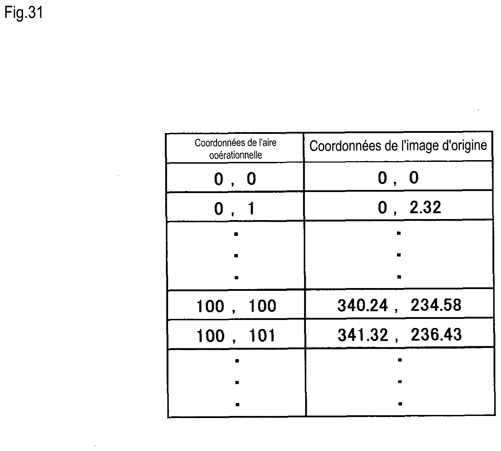

La figure 31 illustre la disposition des enregistrements de la deuxième base des données de conversion. La deuxième base des données de conversion est une base de données qui enregistre les coordonnées de l'étendue opérationnelle et les coordonnées de l'image originale. La deuxième base de données de conversion possède un champ de coordonnées de l'étendue opérationnelle et un champ de coordonnées de l'image source.

Le champ de coordonnées de l'étendue opérationnelle enregistre les coordonnées de l'étendue opérationnelle telles que décrites à l'aide de la figure 29A. Le champ de coordonnées de l'image source enregistre les coordonnées comme décrit à l'aide de la figure 29B. La figure 31 montre qu'un point dans l'étendue opérationnelle dont les coordonnées sont "100, 100" est projeté sur un point dont les coordonnées dans l'image originale sont "340,24, 234,58".

Par exemple, si le rapport hauteur sur largeur de l'étendue opérationnelle est différent du rapport hauteur sur largeur de l'image source, l'image source n'est pas projetée sur le bord de l'étendue opérationnelle. Dans ce cas, un symbole "-" est enregistré dans le champ des coordonnées de l'image originale correspondant aux coordonnées de l'étendue opérationnelle qui ne sont pas projetées.

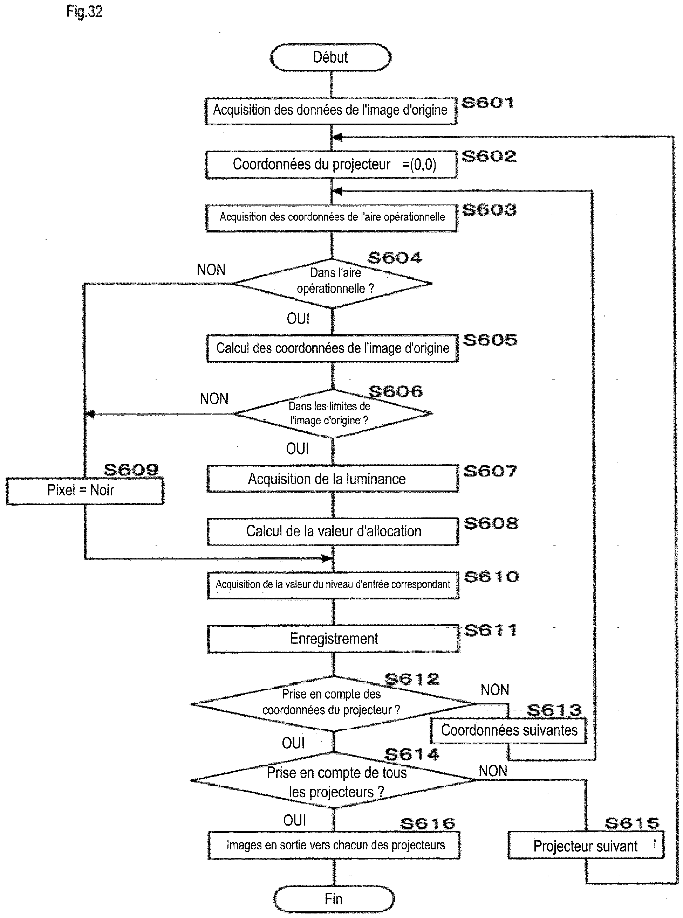

La figure 32 est un organigramme illustrant le déroulement du programme de la configuration 9. L'unité centrale 21 obtient les données de l'image originale depuis le dispositif de stockage auxiliaire 23 ou d'un autre serveur ou équipement similaire connecté via un réseau (étape S601).

L'unité centrale 21 sélectionne un des projecteurs 31 pour le traitement, étape omise dans l'organigramme, et fixe la valeur initiale des coordonnées du projecteur à "0, 0" (étape S602). L'unité centrale 21 recherche dans la première base de données de conversion avec les coordonnées du projecteur comme clé, et obtient les enregistrements extraits du champ des coordonnées de l'étendue opérationnelle (étape S603). L'unité centrale 21 détermine si les coordonnées du projecteur se trouvent ou non dans la plage des coordonnées opérationnelles (étape S604). Si elles sont hors des coordonnées de l'étendue opérationnelle (NON à l'étape S604), le symbole "-" est enregistré dans les coordonnées de l'étendue opérationnelle obtenues à l'étape S603.

Si les coordonnées sont déterminées comme étant dans l'étendue opérationnelle (OUI à l'étape S604), l'unité centrale 21 calcule les coordonnées de l'image originale correspondant aux coordonnées de l'étendue opérationnelle (étape S605). Plus précisément, l'unité centrale 21 recherche dans la deuxième base des données de conversion en utilisant comme clé plusieurs coordonnées à proximité des coordonnées de l'étendue opérationnelle obtenues à l'étape S603, extrait les enregistrements et interpole les coordonnées de l'image originale des enregistrements extraits afin de calculer les coordonnées de l'image originale. L'interpolation peut être effectuée par n'importe quelle méthode, telle que la méthode d'estimation du plus proche voisin, la méthode bilinéaire, la méthode bicubique, etc.

L'unité centrale 21 détermine si les coordonnées calculées de l'image source se trouvent dans les limites de l'image source (étape S606). Par exemple, si le symbole "-" est enregistré dans le champ des coordonnées d'origine de l'enregistrement extrait par la recherche dans la deuxième base de données de conversion et que l'interpolation ne peut être effectuée avec succès, l'unité centrale 21 détermine que les coordonnées sont en dehors des limites de l'image d'origine.

Si les coodonnées sont jugées comme se trouvant dans la plage de l'image originale (OUI à l'étape S606), l'unité centrale 21 obtient la luminance du pixel en se basant sur les données de l'image originale obtenues à l'étape S601 (étape S607). Par exemple, la luminance du pixel peut être la luminance du point de l'image originale le plus proche des coordonnées calculées à l'étape S605. À partir des données de l'image originale, les pixels proches des coordonnées calculées à l'étape S605 peuvent être extraits et interpolés en utilisant n'importe quelle technique d'interpolation pour calculer la luminance.

L'unité centrale 21 calcule la luminance allouée aux projecteurs 31 en intégrant la luminance calculée à l'étape S607 selon la distribution enregistrée dans le champ de distribution de l'enregistrement extrait de la première base des données de conversion à l'étape S603 (étape S608).

Si les coordonnées sont déterminées comme étant hors de l'étendue opérationnelle (NON à l'étape S604) ou hors de l'image originale, l'unité centrale 21 détermine que le pixel est noir, c'est-à-dire que la luminance du pixel est nulle.

Après l'achèvement de l'étape S608 ou de l'étape S609, l'unité centrale 21 obtient les valeurs de niveau d'entrée correspondant à la luminance des pixels (étape S610). Dans ce cas, l'unité centrale 21 effectue une interpolation basée sur l'usage de la base des données de correction en luminance 52 décrite dans la figure 6, et calcule la valeur du niveau d'entrée correspondant à la position calculée à l'étape S603 et à la valeur de luminance obtenue à l'étape S608 ou à l'étape S609. Dans la présente configuration, une base de données de correction en luminance 52 est créée pour chaque projecteur 31 sur la base de la luminance de projection lorsque ledit projecteur 31 est utilisé seul.

L'unité centrale 21 enregistre les valeurs de niveau d'entrée obtenues à l'étape S610 par rapport aux coordonnées du projecteur, et l'unité centrale 21 détermine si le traitement de toutes les coordonnées du projecteur est terminé ou non (étape S611). Si le traitement est considéré comme non terminé (NON à l'étape S612), l'unité centrale 21 sélectionne les coordonnées suivantes du projecteur à traiter, et l'unité centrale 21 retourne à l'étape S603.

S'il est déterminé que le traitement de toutes les coordonnées du projecteur est terminé (OUI à l'étape S612), l'unité centrale 21 détermine si le traitement de tous les projecteurs 31 est terminé ou non (étape S614). S'il est jugé que tous les projecteurs 31 n'ont pas été traités (NON à l'étape S614), l'unité centrale 21 sélectionne le projecteur 31 suivant à traiter, et l'unité centrale retourne à l'étape S602.

Lorsqu'il est déterminé que tous les projecteurs 31 ont été traités (OUI à l'étape S614), l'unité centrale 21 transmet l'image à tous les projecteurs 31 (étape S616). L'image est projetée de chacun des projecteurs 31 vers l'écran 33. Il en résulte un affichage en luminance réelle, qui projette sur l'écran 33 une image dont la luminance est fidèle aux données de l'image originale. L'unité centrale met fin au traitement.

### Première variante.

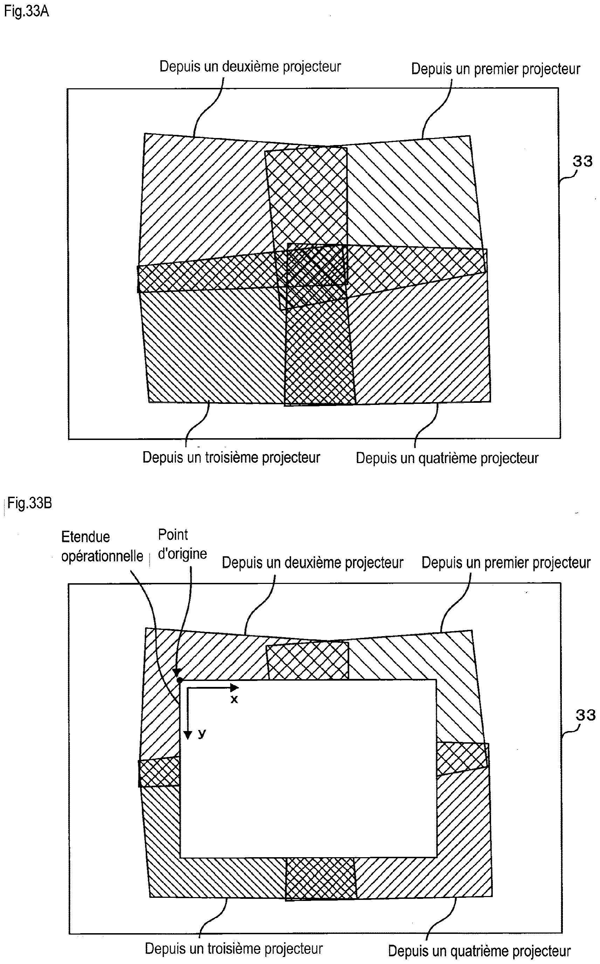

La figure 33 est une illustration d'une première variante de la configuration 9. La figure 33A montre la projection du premier projecteur 311 au quatrième projecteur 314 sur l'écran 33. Les bords des plages de projection des quatre projecteurs 31 se chevauchent légèrement avec au centre un chevauchement simultané des quatre projecteurs 31.

La figure 33B montre l'étendue opérationnelle superposée à la figure 33. Pour chaque projecteur 31, une première base des données de conversion décrite à l'aide de la figure 30 peut être créée. En préparant un champ de distribution dans cette première base des données de conversion, la luminance peut être attribuée de manière appropriée à chaque projecteur 31 même lorsque le nombre de projecteurs 31 à superposer et à projeter varie en fonction de l'emplacement.

### Deuxième variante.

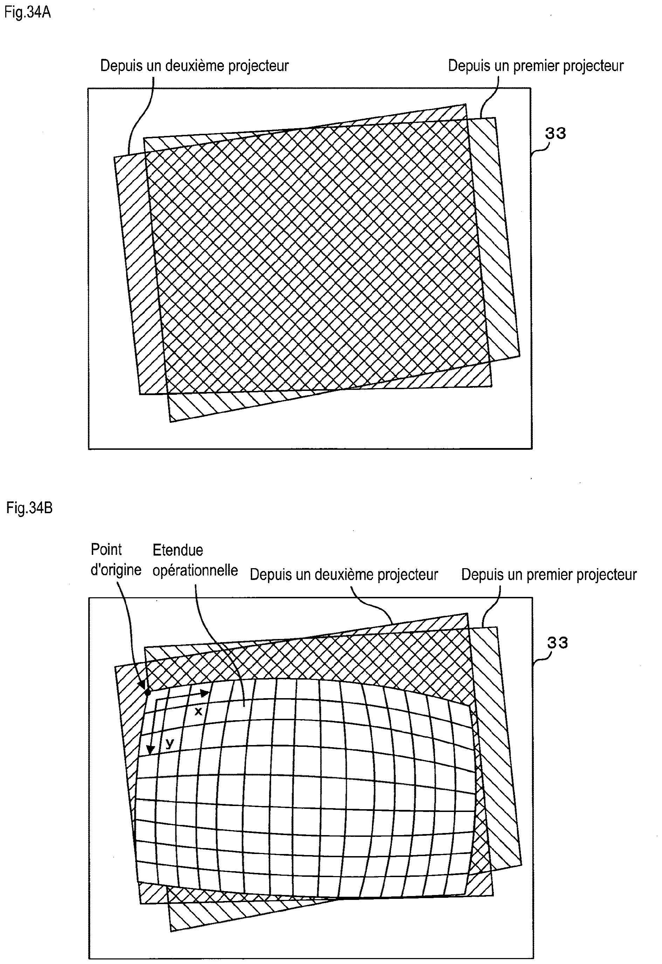

La figure 34 est une illustration d'une deuxième variante de la configuration 9. Dans cette variante, un système de coordonnées transformé en système de coordonnées en forme de tonneau est utilisé au lieu d'un système de coordonnées orthogonales pour l'étendue opérationnelle. En créant la deuxième base de données de transformation décrite par la figure 31 basée sur un tel système de coordonnées en forme de tonneau, les données de l'image originale peuvent être transformées en un affichage en forme de tonneau.

Selon la présente configuration, en combinant la première et la deuxième base des données de conversion, il est possible d'obtenir divers types de projections, par exemple, comme celles décrites à l'aide des figures 33 et 34.

Les caractéristiques techniques (exigences constitutives) décrites dans chaque exemple peuvent être combinées entre elles et, une fois combinées, peuvent former de nouvelles caractéristiques techniques.
Les exemples présentés ici sont indicatifs à tous égards et ne doivent pas être considérés comme restrictifs. La portée de l'invention est indiquée par les revendications, et non par les décriptions ci-dessus. Elle est destinée à inclure toutes les modifications conformément aux revendications.

### [Description de la numérotation]

- 10: Système de traitement de l'information
- 15: Caméra à tester
- 16: Simulateur de conduite
- 17: Pare-brise
- 18: Siège
- 19: Volant
- 20: Dispositif de traitement de l'information
- 21: Unité centrale de calcul
- 22: Dispositif de stockage principal
- 23: Dispositif de stockage auxiliaire
- 24: Unité de transmission
- 25: Interface de sortie
- 26: Interface d'entrée
- 27: Ecran de contrôle
- 28: Unité de lecture
- 30: Dispositif d'affichage
- 31: Projecteurs
- 311: Premier projecteur
- 312: Second projecteur
- 313: Troisième projecteur
- 314: Quatrième projecteur
- 315: Cinquième projecteur
- 316: Sixième projecteur
- 321: Premier projecteur auxiliaire
- 322: Second projecteur auxiliaire
- 323: Troisième projecteur auxiliaire
- 324: Quatrième projecteur auxiliaire
- 33: Écran (unité d'affichage)
- 331: Premier écran.
- 332: Deuxième écran.
- 333: Troisième écran.
- 36: Luminancemètre (luminancemètre couleur bidimensionnel)
- 37: Caméra
- 51: Base de données des mesures de luminance
- 52: Base de données des corrections en luminance
- 61: Première unité d'acquisition
- 62: Deuxième unité d'acquisition
- 63: Unité de correction de la luminance
- 64: Unité de transmission en sortie
- 96: Support de stockage portable
- 97: Programme informatique
- 98: Mémoire à semi-conducteurs

## Revendications

1. Un dispositif de traitement de l'information comprenant les unités fonctionnelles suivantes :
- Une première unité d'acquisition qui acquiert des informations de correction en luminance en vue de corriger la luminance des images affichées par une unité d'affichage. Lesdites informations de correction associent au signal d'entrée d'une image les mesures de luminance affichée à partir de ce signal d'entrée, mesures prises d'une position spatiale prédéterminée face à l'unité d'affichage,
- Une seconde unité d'acquisition, qui acquiert les données de l'image destinée à être affichée par l'unité d'affichage,
- Une unité de correction en luminance, qui corrige les données d'image acquises par la seconde unité d'acquisition sur la base des informations de correction en luminance acquises par la première unité d'acquisition,
- Une unité de transmission en sortie qui communique à l'unité d'affichage les données d'image corrigées par l'unité de correction en luminance.

2. Un dispositif de traitement de l'information selon la revendication 1 comprenant les unités fonctionnelles suivantes :
- Une troisième unité d'acquisition pour l'acquisition des informations de correction de forme afin de corriger la forme de l'image,
- Une unité de correction de forme, dans laquelle les données d'image corrigées par l'unité de correction en luminance sont corrigées sur la base des informations de correction de forme obtenues par la troisième unité d'acquisition.
- Une unité de transmission en sortie qui communique à l'unité d'affichage les données d'image corrigées par l'unité de correction de forme.

3. Un dispositif de traitement de l'information selon l'une quelconque des revendications 1 ou 2 comprenant la fonction suivante :
- Une correction des données d'image par une unité de correction en luminance ansi que décrite ci-dessus de manière à ce qu'une unité d'affichage telle que décrite ci-dessus puiise afficher une image en luminance réelle correspondant aux données d'image,
- Lesdites données d'image comprenant des données en composantes trichromatiques associées à la luminance réelle.

4. Un système de traitement de l'information comportant un dispositif d'affichage et un dispositif de traitement de l'information telles que :
- Le dispositif d'affichage intègre une unité d'affichage et permet l'affichage d'image,
- Le dispositif de traitement de l'information comporte :
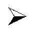 Une première unité d'acquisition qui acquiert des informations de correction en luminance en vue de corriger la luminance des images affichées par l'unité d'affichage. Lesdites informations de correction associent au signal d'entrée d'une image les mesures de luminance affichée à partir du signal d'entrée, mesures prises d'une position spatiale prédéterminée face à l'unité d'affichage,
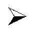 Une seconde unité d'acquisition, qui acquiert l'image destinée à être affichée par l'unité d'affichage,
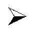 Une unité de correction en luminance, qui corrige l'image acquise par la deuxième unité d'acquisition sur la base des informations de correction acquises par la première unité d'acquisition,
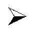 Une unité de transmission en sortie qui communique à l'unité d'affichage l'image corrigée par l'unité de correction en luminance.

5. Un système de traitement de l'information selon la revendication 4 intègrant un dispositif de traitement de l'information tel que décrit ci-dessus et qui comporte une unité d'acquisition de position pour obtenir la position de mesure telle qu'introduite ci-dessus.

6. Un système de traitement de l'information selon l'une quelconque des revendications 4 ou 5 tel que :
- L'unité d'affichage est un écran de rétroprojection,
- Le dispositif d'affichage comprend plusieurs projecteurs capables de projeter une image sur ledit écran,
- Les projecteurs sont disposés de manière à ce que les aires de projection se superposent,
- Le dispositif de traitement de l'information est tel que :
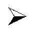 Lesdits multiples projecteurs sont équipés d'une unité de correction de forme qui permet l'affichage par recouvrements multiples sur l'écran de l'image acquise depuis la seconde unité d'acquisition corrigée en forme,
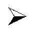 L'unité de correction en luminance corrige en luminance l'image déjà corrigée en forme par l'unité de correction de forme,
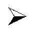 L'unité de transmission en sortie communique l'image corrigée par l'unité de correction en luminance à chacun des projecteurs.

7. Un système de traitement de l'information selon la revendication 6 tel que :
- Une partie des projecteurs multiples est disposée de telle sorte qu'une partie seulement de leur aire de projection chevauche l'aire de projection des autres projecteurs.

8. Procédé de traitement de l'information permettant à un ordinateur d'effectuer les traitements suivants :
- Acquisition des informations de correction en luminance en vue de corriger la luminance des images affichées par l'unité d'affichage. Lesdites informations de correction associent au signal d'entrée d'une image les mesures de luminance affichée à partir du signal d'entrée, mesures prises d'une position spatiale prédéterminée face à l'unité d'affichage,
- Acquisition de l'image à afficher par une unité d'affichage telle que décrite ci-dessus,
- Correction de l'image acquise sur la base des informations de correction en luminance,
- Transmission à l'unité d'affichage de l'image corrigée.
